# EUROPEAN PATENT APPLICATION

(11) **EP 4 804 250 A1**
(43) Date of publication of application: **09.09.2026**
(21) Application number: 24885948.0
(22) Date of filing: 24.06.2024
(51) Int. Cl.: H01M 4/36, H01M 10/0585, H01M 4/58, H01M 4/62, H01M 4/136, H01M 10/0562, H01M 10/052, H01M 4/133

(54) **ALL-SOLID-STATE SECONDARY BATTERY, AND METHOD FOR MANUFACTURING SAME**

(30) Priority: 30.10.2023 KR 20230146992
(71) Applicant: SAMSUNG SDI CO., LTD., Yongin-si, Gyeonggi-do 17084 (KR)
(72) Inventor: LIM, Hyung Sub, Yongin-Si, Gyeonggi-do 17084 (KR); SON, In Hyuk, Yongin-Si, Gyeonggi-do 17084 (KR); JO, Sung Nim, Yongin-Si, Gyeonggi-do 17084 (KR); SHIM, Kyu Eun, Yongin-Si, Gyeonggi-do 17084 (KR); PARK, Tae Hyun, Yongin-Si, Gyeonggi-do 17084 (KR); LEE, Ji Eun, Yongin-Si, Gyeonggi-do 17084 (KR)
(74) Representative: Maiwald GmbH
(86) International application number: PCT/KR2024/008713
(87) International publication number: WO 2025/095266

(57) **Abstract**

Disclosed herein are an all-solid-state secondary battery and a method of manufacturing the same, the all-solid-state secondary battery including: a cathode layer; an anode layer; and a solid electrolyte layer disposed between the cathode layer and the anode layer, wherein the cathode layer includes a cathode current collector and a cathode active material layer disposed on one or both sides of the cathode current collector, the cathode active material layer includes a composite cathode active material, the composite cathode active material includes a composite of M₂S, an alkali metal salt, an inorganic electronic conductive structure, and a metal conductive material, where M is an alkali metal, and the alkali metal is Li or Na, an electronic conductivity of the inorganic electronic conductive structure is 1 x 10⁻³ S/cm or more, the composite includes a solid solution of M₂S and an alkali metal salt, and a ratio of length/thickness of the metal conductive material is 2 or more.

## Description

### Technical Field

The present disclosure relates to an all-solid-state secondary battery and a method of manufacturing the same.

### Background Art

Recently, due to industrial demands, the development of batteries with high energy density and safety is actively underway. For example, lithium batteries are used in a variety of applications, including information devices, communication devices, and automobiles. Since automobiles impact human lives, safety is also important.

Lithium batteries employing liquid electrolytes may have an increased risk of fire and/or explosion in the event of a short circuit. All-solid-state secondary batteries employing solid electrolytes instead of liquid electrolytes have been proposed. Solid electrolytes have a lower likelihood of ignition than liquid electrolytes.

All-solid-state secondary batteries can reduce the risk of fire or explosion by employing solid electrolytes instead of liquid electrolytes. All-solid-state secondary batteries can provide improved safety.

When lithium sulfide is used as a cathode active material for all-solid-state secondary batteries, it needs to be combined with a material having high electrical and ionic conductivity because lithium sulfide is an insulator with almost no electrical and ionic conductivity.

### Disclosure of Invention

### Technical Problem

An aspect is to provide an all-solid-state secondary battery with improved initial efficiency, high-rate characteristics, and energy density by having a cathode with an enhanced electronic conduction network.

Another aspect is to provide a method of manufacturing the above-described solid secondary battery.

### Solution to Problem

According to an aspect, there is provided an all-solid-state secondary battery including: a cathode layer; an anode layer; and a solid electrolyte layer disposed between the cathode layer and the anode layer, wherein the cathode layer includes a cathode current collector; and a cathode active material layer disposed on one or both sides of the cathode current collector, the cathode active material layer includes a composite cathode active material, the composite cathode active material includes a composite of M₂S, an alkali metal salt, an inorganic electronic conductive structure, and a metal conductive material, where M is an alkali metal, and the alkali metal is Li or Na, an electronic conductivity of the inorganic electronic conductive structure is 1 x 10⁻³ S/cm or more, and a ratio of length/thickness of the metal conductive material is 2 or more.

A content of the metal conductive material is 0.1 to 40 parts by weight based on 100 parts by weight of the composite, a content of the inorganic electronic conductive structure is 1 to 30 parts by weight based on 100 parts by weight of the composite, and a mixing weight ratio of the inorganic electronic conductive structure and the metal conductive material is 1:1 to 10:1.

The composite of M₂S, an alkali metal salt, an inorganic electronic conductive structure, and a metal conductive material has a particle size of 2 µm or less. The composite of M₂S, an alkali metal salt, an inorganic electronic conductive structure, and a metal conductive material further includes a carbon-based material.

According to another aspect, there is provided a method of manufacturing an all-sold-state secondary battery, the method comprising: first milling M₂S and an alkali metal salt; adding an inorganic electronic conductive structure and a metal conductive material to the first milled product and performing second milling to obtain a composite; preparing a cathode using a composition in which a binder is added to or mixed with the composite; preparing an anode; and placing an electrolyte between the cathode and the anode.

In the obtaining of the composite, a carbon-based material may be further added to the composition.

### Advantageous Effects of Invention

According to an aspect, it is possible to provide an all-solid-state secondary battery with improved initial efficiency and high-rate characteristics, as well as improved volumetric energy density, by providing a cathode with an enhanced electronic conduction network using a composite of an inorganic electronically conductive structure and a metal conductive material.

### Brief Description of Drawings

FIG. 1 is a view showing a cathode active material layer according to an embodiment.
FIGS. 2 to 7 are cross-sectional views of a solid secondary battery according to an exemplary embodiment.

### <List of Reference Numerals for Major Elements>

| | | | |
|---|---|---|---|
| 1 | All-solid-state secondary battery | 10 | Cathode |
| 11 | Cathode current collector | 12 | Cathode active material layer |
| 20 | Anode | 21 | Anode current collector |
| 22 | First anode active material layer | 30 | Electrolyte layer |
| 40 | Inactive member | 41 | First inactive member |
| 41: | Second inactive member | | |

### Best Mode for Carrying out the Invention

Unless otherwise defined, all terms (including technical and scientific terms) used in the present disclosure have the same meaning as that commonly understood by one of those skilled in the art to which the present disclosure belongs. Further, the terms defined in commonly used dictionaries should be interpreted as having a meaning consistent with their meaning within the context of the relevant art and the present disclosure, and should not be interpreted in an idealized or overly formal sense.

Exemplary embodiments are described in the present disclosure with reference to cross-sectional views which are schematic views of idealized embodiments. In this way, for example, variations from the shapes of the drawings may be expected as a result of manufacturing techniques and/or tolerances. Therefore, embodiments described in the present disclosure should not be construed as being limited to the specific shapes of regions as illustrated in the drawings of the present disclosure, and should include, for example, deviations in shapes resulting from manufacturing. For example, a region illustrated or described as flat may typically have rough and/or non-linear features. Further, sharply illustrated angles may be round. Accordingly, the regions illustrated in the drawings are schematic in nature, and their shapes are not intended to illustrate the precise shape of the regions and are not intended to limit the scope of this disclosure.

The present inventive concept may be embodied in many different forms and should not be construed as limited to the embodiments described in the present disclosure. These embodiments are provided so that the present disclosure will be made thoroughly and completely, and are provided to fully transfer the scope of the present inventive concept to those skilled in the art. Identical reference numerals refer to identical components.

When a component is referred to as being "over" another component, it can be understood that it may be directly on another component, or that there may be other components intervening therebetween. In contrast, when a component is said to be "directly on" another component, there are no intervening component therebetween.

The terms "first," "second," "third," etc. may be used herein to describe various components, ingredients, regions, layers, and/or zones, these components, ingredients, regions, layers, and/or zones should not be limited by these terms. These terms are used only to distinguish one component, ingredient, region, layer or zone from another component, ingredient, region, layer or zone. Accordingly, a first component, ingredient, region, layer or zone described below may be referred to as a second component, ingredient, region, layer or zone without departing from the teachings of the present disclosure.

The terms used in the present disclosure is for the purpose of describing specific embodiments only and is not intended to limit the present inventive concept. The singular form used in the present application is intended to include the plural form including "at least one" unless the context clearly dictates otherwise. "At least one" should not be construed as limiting to the singular. As used in the present disclosure, the term "and/or" includes any and all combinations of one or more of the listed items. The terms "include" and/or "including" as used in the detailed description specify stated features, regions, integers, steps, operations, components and/or ingredients, but do not preclude the presence or addition of one or more other features, regions, integers, steps, operations, components and/or ingredients.

Spatially relative terms such as "bottom," "below," "lower," "upper," "top," and the like may be used herein to easily describe the relationship of one component or feature to another component or feature. It will be understood that spatially relative terms are intended to include different directions of a device when used or operated in addition to the directions illustrated in the drawings. For example, if the device in the drawing is overturned, a component described as being "under" or "below" another component or feature would be oriented "above" the other component or feature. Thus, the exemplary term "below" may include both upward and downward directions. The above device may be placed in other directions (rotated 90 degrees or in other directions), and the spatially relative terms used in the present disclosure may be interpreted accordingly.

The "group" refers to a group of the periodic table of elements according to the International Union of Pure and Applied Chemistry ("IUPAC") Group 1 to18 classification system.

In the present disclosure, the "particle size" refers to an average diameter when particles are spherical and refers to an average major axis length when the particles are non-spherical. The particle size may be measured using a particle size analyzer (PSA). The "particle size" is, for example, an average particle size. The "average particle size" is, for example, a median particle diameter, D50.

D50 is a size of the particle corresponding to 50% of the cumulative volume, calculated from the side of the particle with the smaller particle size in the size distribution of the particles measured by laser diffraction.

D90 is a size of the particle corresponding to 90% of the cumulative volume, calculated from the side of the particle with the smaller particle size in the size distribution of the particles measured by laser diffraction.

D10 is a size of the particle corresponding to 10% of the cumulative volume, calculated from the side of the particle with the smaller particle size in the size distribution of the particles measured by laser diffraction.

In the present disclosure, the "metal" includes both metals and metalloids such as silicon and germanium, in either an elemental or ionic state.

In the present disclosure, the "alloy" refers to a mixture of two or more metals.

In the present disclosure, the "electrode active material" refers to an electrode material capable of undergoing lithiation and delithiation.

In the present disclosure, the "cathode active material" refers to a cathode material capable of undergoing lithiation and delithiation, and in the present disclosure, the "anode active material" refers to an anode material capable of undergoing lithiation and delithiation.

In the present disclosure, the "lithiation" and "lithiating" refer to a process of adding lithium to an electrode active material. Further, In the present disclosure, the "delithiation" and "delithiating" refer to a process of removing lithium from an electrode active material.

In the present disclosure, the "charge" and "charging" refer to a process of providing electrochemical energy to a battery, and in the present disclosure, the "discharge" and "discharging" refer to a process of removing electrochemical energy from a battery.

In the present disclosure, the "positive electrode" or "cathode" refers to an electrode where electrochemical reduction and lithiation occur during a discharge process, and in the present disclosure, the "negative electrode" or "anode" refers to an electrode where electrochemical oxidation and delithiation occur during a discharge process.

In the present disclosure, the "thickness" and "length" refer to "average thickness" and "average length".

In the present disclosure, the aspect ratio refers to a ratio (L1/L2) of the major axis length L1 (e.g., length) and the minor axis length L2 (e.g., diameter). Here, the aspect ratio, major axis length, minor axis length, length, and diameter refer to an average aspect ratio, an average major axis length, an average minor axis length, an average length, and an average diameter. The aspect ratio can be evaluated using a scanning electron microscope.

In this specification, the "solid solution" is different from a mixture of two or more chemical species and refers to a homogeneous crystalline phase containing two or more chemical species.

Although specific embodiments have been described, alternatives, modifications, variations, improvements, and substantial equivalents, which are not currently anticipated or cannot be anticipated, may occur to the applicant or those skilled in the art. Accordingly, the appended claims, as filed and as amended, are intended to include all such alternatives, modifications, variations, improvements and substantial equivalents.

Hereinafter, according to exemplary embodiments, a composite cathode active material, a cathode including the same, and all-solid-state secondary battery including the same will be described in more detail.

### [Composite cathode active material]

A composite cathode active material according to an embodiment includes a composite of M₂S, an alkali metal salt, an inorganic electronic conductive structure, and a metal conductive material, where M is an alkali metal, and the alkali metal is Li or Na, an electronic conductivity of the inorganic electronic conductive structure is 1 x 10⁻³ S/cm or more or 1 x 1×10⁻² S/cm or more, and a ratio of length/diameter of the metal conductive material is 2 or more. In the present disclosure, the length refers to a size in the X direction.

When the composite cathode active material includes a composite of M₂S, an alkali metal salt, and an inorganic electronic conductive structure, further improvement of an electronic conductive network is required depending on the shape of the inorganic electronic conductive structure.

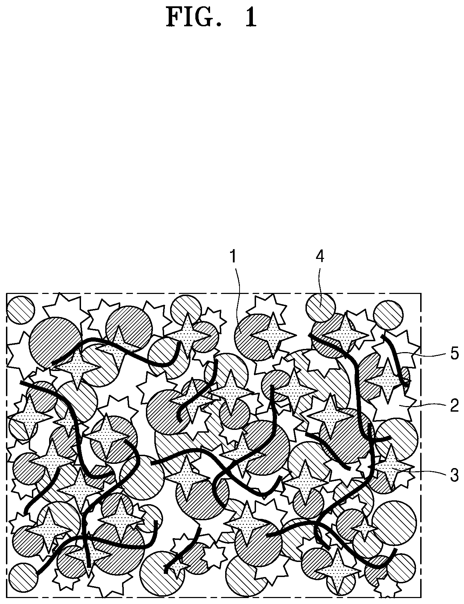

FIG. 1 schematically shows a structure of a cathode active material layer according to an embodiment. In FIG. 1, Li₂S is used as an example of M₂S, and Lil is used as an example of an alkali metal salt.

Referring to FIG. 1, the cathode active material layer contains Li₂S 1, Lil 2, an inorganic electronic conductive material 3, and a solid electrolyte 4.

As shown in FIG. 1, the inorganic electronic conductive material 3 forms a network imparting electronic conductivity between lithium sulfide insulators, but is required to further enhance an electronic conductive network depending on the shape of the inorganic electronic conductive material 3.

When a carbon conductive material is further added during the preparation of the cathode electrode active material layer, the carbon conductive material may undergo side reactions with a solid electrolyte, thereby leading to a decrease in initial efficiency.

In the present disclosure, by adding a metal conductive material 5 having a length/diameter ratio of 2 or more, an electronic conductive network within an electrode can be effectively enhanced due to long path network effect as shown in FIG. 1. When the electronic conductive network is enhanced in this way, it is possible to manufacture an all-solid-state secondary battery with improved electrode energy density, high-rate characteristics, and lifespan characteristics. In addition, unlike a carbon conductive material such as carbon nanotubes, this metal conductive material does not cause side reactions with a solid electrolyte, so that it is possible to manufacture all-solid-state secondary batteries with improved initial efficiency and lifespan characteristics.

The metal conductive material is, for example, SUS, Ti, Ni, Al, Ag, Au, V, Cr, Mn, Fe, Co, Cu, Zn, Nb, Ta, Mo, W, or a combination thereof. Here, the "combination thereof " includes an alloy of the previously listed metals, such as Al-Fe, Al-Cr-Fe. This metal conductive material has corrosion resistance to hydrogen sulfide gas.

The content of the metal conductive material is 0.1 to 30 parts by weight, 0.1 to 2 parts by weight, 0.1 to 10 parts by weight, 0.1 to 5 parts by weight, 0.1 to 3 parts by weight, 0.1 to 2 parts by weight, or 0.1 to 1 part by weight, based on 100 parts by weight of the composite cathode active material. The length of the metal conductive material is 1 to 50 µm, 1 to 40 µm, 1 to 30 µm, 1 to 20 µm, 1 to 10 µm, or 1 to 5 µm, and the diameter thereof is 0.01 to 10 µm, 0.01 to 5 µm, 0.01 to 3 µm, 0.01 to 2 µm, or 0.01 to 1 µm. When the metal conductive material has the above-described length and diameter ranges, the overall electronic conductivity of the composite is enhanced, and the local imbalance of electronic conductivity within the composite can be further alleviated. Since the metal conductive material has the length and diameter within these ranges, an ion conduction path within a lithium battery containing the metal conductive material is extended, a volume change of the cathode active material during charging and discharging of an all-solid-state secondary battery can be more effectively accommodated, and an ion conduction path within the all-solid-state secondary battery can be maintained despite the volume change of the cathode active material. As a result, the deterioration of the all-solid-state secondary battery can be suppressed, and the cycle characteristics of the all-solid-state secondary battery can be improved.

The length/diameter ratio (aspect ratio) of the metal conductive material may be, for example, 2 or more, 3 or more, 5 or more, 8 or more, 10 or more, or 20 or more. The aspect ratio of the metal conductive material may be, for example, 5 to 50, 10 to 40, 10 to 45, or 20 to 40. The aspect ratio of a fibrous metal conductive material may be, for example, 5 to 50, 10 to 40, 10 to 45, or 20 to 40. Since the metal conductive material has an aspect ratio within this range, the electronic conductive network of the composite is enhanced in this way, thereby improving the overall electronic conductivity of the composite and further alleviating the local imbalance of electronic conductivity within the composite.

The metal conductive material may have, for example, a rod structure, a tube structure, a needle structure, a wire structure, or a combination thereof, but are not necessarily limited to these forms; any metal conductive material having fibrous structures used in the relevant technical field is possible. Since the metal conductive material has a rod structure, a tube structure, a needle structure, a wire structure, or the like, an ion conduction path within an all-solid-state secondary battery containing the fibrous carbon-based material is extended, a volume change of the cathode active material during charging and discharging of the all-solid-state secondary battery can be more effectively accommodated, and an ion conduction path within the all-solid-state secondary battery can be maintained despite the volume change of the cathode active material. As a result, the deterioration of the all-solid-state secondary battery can be suppressed, and the cycle characteristics of the all-solid-state secondary battery can be improved.

A cross-section perpendicular to the length direction of the metal conductive material, that is, a side surface of the fibrous carbon-based material, may have, for example, an irregular, circular, or polygonal shape. The shape of the side surface of the metal conductive material is determined, for example, by the plan view seen in the length direction (z-direction) of the metal conductive material. The polygonal shape may include, for example, a triangle, a square, a pentagon, a hexagon, a heptagon, an octagon, a nonagon, or a decagon, but are not necessarily limited thereto; any shape having a polygonal form used in the relevant technical field is possible. The circular shape may have the shape of, for example, a perfect circle or an ellipse, but it is not limited to these shapes; any shape that is circular overall is possible. The circularity of the cross-section perpendicular to the length direction of the metal conductive material, that is, the circularity of the side surface of the metal conductive material, may be, for example, 0.6 or more, 0.7 or more, 0.8 or more, or 0.9 or more. The circularity is calculated by, for example, 4πA/P2, where A is an area of the side surface or cross-section of the fibrous carbon-based material and P is a perimeter of the side surface or cross-section thereof.

In the present disclosure, the content of the inorganic electronic conductive structure is 1 to 40 parts by weight, 1 to 30 parts by weight, 2 to 20 parts by weight, 3 to 15 parts by weight, or 5 to 10 parts by weight based on 100 parts by weight of the composite. Further, the mixing weight ratio of the inorganic electronic conductive structure and the metal conductive material is 1:1 to 10:1, 3:1 to 10:1, or 5:1 to 9:1. When the weight ratio of the inorganic electronically conductive structure and the metal conductive agent is within the above range, high-rate characteristics, lifespan characteristics, and electrode density can be improved due to the improvement of an electronic conductivity network within an electrode.

Electronic conductivity may be measured using, for example, electrochemical impedance spectroscopy, DC polarization method, or the like. Since the composite containing such metal conductive material and inorganic electronic conductive structure has electronic conductivity within this range, the internal resistance of the composite cathode active material containing the composite can be reduced. The initial efficiency, electrode energy density, and lifespan characteristics of an all-solid-state secondary battery containing the composite cathode active material can be improved.

The size of M₂S crystallites obtained from an XRD spectrum of the composite is less than 10 nm, and the composite includes a solid solution of M₂S and an alkali metal salt.

Since the Inorganic electronic conductive structure is an inorganic structure that has electronic conductivity and has almost no ionic conductivity; it is advantageous in forming a conductive network due to its small particle size and uniform dispersion in the composite. The inorganic electronic conductive structure may have a shape of zero-dimension, one-dimension, two-dimension, three- dimension, or a combination thereof.

The zero-dimensional shape may be a particle shape, the one-dimensional shape may be a fiber shape, and the two-dimensional shape may be a plate shape. When a cathode and an all-solid-state secondary battery are manufactured using the composite utilizing such an inorganic electronic conductive structure, initial efficiency (specific capacity) is improved by reducing side reaction characteristics with a solid electrolyte. Here, a side reaction refers to, for example, an increase in resistance due to a reaction between a hydroxyl group (H₂O) present in a carbon-based material layer and a solid electrolyte, or an increase in resistance due to a reaction of carbon with liquid lithium polysulfide (Li₂S₄ < Li₂S₆). The carbon-based material refers to graphene, carbon nanofibers (CNF), or the like, which are used as a conductive material.

The content of the inorganic electronic conductive structure in the composite is 1 to 30 parts by weight, 1 to 20 parts by weight, 1 to 15 parts by weight, or 5 to 15 parts by weight based on 100 parts by weight of the composite.

The length of the inorganic electronic conductive structure is 1 to 50 µm and the thickness thereof is 0.01 to 10 µm, and the size of the M₂S is 0.1 nm to 10 µm. When a composite utilizing a two-dimensional carbon nanostructure having such length and thickness is used, it is possible to manufacture an all-solid-state secondary battery with improved lifespan characteristics by the improvement of an electron conductivity network within the cathode. In addition, energy density within an electrode can be improved by reducing the content of a conductive material within the cathode through the enhancement of the electronic conductivity network. In addition, the content of lithium sulfide relatively increases due to the reduction in the content of a conductive material within the cathode, thereby improving initial efficiency.

Inorganic electronic conductive structures may be used if they are materials that have a two-dimensional structure, have chalcogenide properties, and have electronic conductivity.

The inorganic electronic conductive structure may have a shape of zero-dimension, one-dimension, or two-dimension. The zero-dimensional shape may be a spherical particle shape, the one-dimensional shape may be a fiber shape, and the two-dimensional shape may be a plate shape. When using an inorganic electronic conductive structure with a one-dimensional shape, a cathode with improved thick film and electrode stability can be prepared, and when using an inorganic electronic conductive structure with a two-dimensional shape, an effect of suppressing the volume expansion of the cathode can be improved.

The inorganic electronic conductive structure includes a transition metal sulfide, a metal sulfide of at least one of group 3 to 5 metals, or a combination thereof, and the inorganic electronic conductive structure is titanium, vanadium, chromium, manganese, iron, cobalt, nickel, copper, zinc, niobium, tantalum, molybdenum, tungsten, or a combination thereof.

The metal sulfide, for example, transition metal sulfide, is at least one metal material selected from ZrS₂, FeS, FeS₂, CuS, Cu₂S, CuS₂, Cu₉S₈, Cu₇S₄, CoS, CoS₂, Co₃S₄, Co₉S₈, NiS, NiS₂, Ni₉S₈, Ni₃S₂, VS, VS₂, V₂S₃, V₂S₅, VS₄, NbS₂, NbS₃, NbS₄, NbS₅, Nb₂S₃, Nb₂S₅, TaS₂, TaS₃, TaS₄, TaS₅, Ta₂S₃, Ta₂S₅, Cr₂S₃, CrS₃, MoS₂, MoS₃, MoS₄, WS₂, WS₃, WS₄, WS₅, MnS, Mn₂S₃, TiS₂, NiNb₃S₆, Cu₂MoS₄, and Cu₄Mo₆S₈. For example, at least one metal sulfide may be selected from the group consisting of FeS₂, CuS₂, CoS₂, Co₃S₄, NiS₂, VS₂, VS4, NbS₂, NbS₃, NbS₄, NbS₅, TaS₂, TaS₃, TaS₄, TaS₅, CrS₃, MoS₂, MoS₃, MoS₄, WS₂, WS₃, WS₄, and WS₅. This transition metal sulfide may have, for example, a two-dimensional plate shape.

According to another embodiment, the inorganic electronic conductive structure is, for example, at least one metal oxide selected from VO₂, ReO₂, CrO₂, TiOx (0.75≤x≤1.45), TiₙO₂ₙ₋₁(4<n<10), ReO₂, VO₂, SnO₂, TiO₂, ZrO₂, Al₂O₃, and TeN, or a combination thereof.

The inorganic electronic conductive structure may be, for example, alumina fiber, zirconia fiber, titania fiber, TeN fiber, SnO₂ fiber, or a combination thereof. When the inorganic electronic conductive structure has a fiber shape, the length of the inorganic electronic conductive structure is 0.1 to 5 µm, the diameter thereof is 0.01 µm to 0.5 µm, and the aspect ratio thereof is 10 or more.

When the inorganic electronic conductive structure has a two-dimensional plate shape, the length thereof is 1 to 50 µm and the thickness thereof is 0.01 to 10 µm, and the size of the M₂S is 0.1 nm to 10 µm. The size of the alkali metal salt (Lil) is 1 nm to 10 µm.

According to an embodiment, the size ratio of the inorganic electronic conductive structure to Lil is, for example, 3:1 to 0.5:1, and the size ratio of the inorganic electronic conductive structure to Li₂S is, for example, 2:1 to 0.5:1.

According to another embodiment, the size of the inorganic electronic conductive structure is larger than the size of the lithium sulfide or alkali metal salt (Lil), and particle size may gradually decrease in the order of the inorganic electronic conductive structure, the alkali metal salt (Lil), and the M₂S. Here, the size is, for example, an arithmetic mean value of the particle diameters of multiple particles measured using software in a scanning electron microscope image.

The size of the M₂S is equal to or smaller than the size of the alkali metal salt, the size of the inorganic electronic conductive structure is larger than the size of the lithium sulfide or alkali metal salt, and particle size gradually decreases in the order of the inorganic electronic conductive structure, the alkali metal salt, and the M₂S.

The size ratio of the inorganic electronic conductive structure to Lil is, for example, 3:1 to 1.5:1, and the size ratio of the inorganic electronic conductive structure to Li₂S is, for example, 2:1 to 1.5:1.

The M is an alkali metal, and the alkali metal is Li or Na. M₂S is, for example, Li₂S or Na₂S. The composite includes a solid solution of M₂S and an alkali metal salt.

The ionic conductivity and electronic conductivity of M₂S can be simultaneously improved by forming a composite of an alkali metal salt and an inorganic electronic conductive structure. Since the composite includes an alkali metal salt, the ionic conductivity of the composite cathode active material can be improved, and the internal resistance of the cathode and lithium battery each containing the composite cathode active material can be reduced. Since the composite includes an inorganic electronic conductive structure, the electronic conductivity of the composite cathode active material can be improved, and the internal resistance of the cathode and lithium battery each containing the composite cathode active material can be reduced.

The composite includes M₂S crystallites, and the size of the M₂S crystallites is reduced to 10 nm or less, thereby alleviating the volume change of the M₂S crystallites during charging and discharging. For example, as the size of the M₂S crystallites decreases, the volume change caused by one M₂S crystallite decreases, so the overall volume change of the composite during charging and discharging can be alleviated. For example, as the size of the M₂S crystallites decreases, the grain boundaries between multiple M₂S crystallites may more easily accommodate the volume change of the M₂S crystallites during charging and discharging, thereby alleviating the volume change of the composite during charging and discharging. The possibility of occurrence of defects such as cracks can be reduced by the volume change of the composite during charging and discharging. Since the composite cathode active material includes such a composite, the cycle characteristics and life characteristics of a solid secondary battery including the composite cathode active material can be improved. The lifespan characteristics of a solid secondary battery including the composite cathode active material can be improved.

The composite includes M₂S crystallites, and the size of the M₂S crystallites is reduced to 10 nm or less, and thus the contact area between the M₂S crystallites and the alkali metal salt and/or carbon-based material may be further increased. The ionic conductivity and/or electrical conductivity of the composite may be further improved by an increase in the contact area between the M₂S crystallites and the alkali metal salt and/or carbon-based material. Since the composite cathode active material includes such a composite, the reversibility of an electrode reaction in a secondary battery including the composite cathode active material can be improved. As a result, the specific capacity of the composite cathode active material can be increased.

Since the composite includes a solid solution of M₂S and an alkali metal salt, the ionic conductivity of the composite can be increased. For example, since a solid solution of M₂S and an alkali metal salt includes alkali metal ions arranged within the M₂S crystallites, the ionic conductivity of the solid solution of M₂S and an alkali metal salt can be improved compared to the ionic conductivity of M₂S. As a result, the ionic conductivity of the composite can be improved, and the internal resistance of the composite can be decreased. Since the composite cathode active material includes such a composite, the cycle characteristics of a solid secondary battery including the composite cathode active material can be improved. For example, the high-rate characteristics of a secondary battery including the composite cathode active material can be improved.

The Li₂S-alkali metal salt-inorganic electronic conductive structure composite is distinguished from a simple mixture of Li₂S, an alkali metal salt, and a carbon-based material. The simple mixture of Li₂S, an alkali metal salt, and an inorganic electronic structure cannot maintain dense interfaces between the Li₂S, the alkali metal salt, and the carbon-based material, thereby providing high interfacial resistance and consequently deteriorating the lifespan characteristics of a secondary battery. The Li₂S-alkali metal salt-inorganic electronic conductive structure composite is distinguished from a simple mixture of Li₂S, an alkali metal salt, and a carbon-based material. The simple mixture of Li₂S, an alkali metal salt, and an inorganic electronic structure cannot maintain dense interfaces between the Li₂S, the alkali metal salt, and the carbon-based material, thereby providing high interfacial resistance and consequently deteriorating the lifespan characteristics of a secondary battery.

The composite includes M₂S. Since M₂S has a high theoretical capacity, a secondary battery having a high energy density can be provided. However, since M₂S has low ionic conductivity and/or electronic conductivity, it forms a composite with an alkali metal salt and a carbon-based material to overcome this disadvantage. The content of M₂S in the composite is, for example, 10 to 80 wt%, 20 to 70 wt%, 30 to 60 wt%, or 40 to 60 wt% of the total weight of the composite. When the content of M₂S increases excessively, it may not be easy to improve the ionic conductivity and/or electronic conductivity of M₂S. When the content of M₂S is too low, the energy density of a secondary battery may decrease.

The composite includes an alkali metal salt. The alkali metal salt is, for example, a compound that do not includes sulfur (S). The alkali metal salt may be, for example, a binary compound or a ternary compound. The alkali metal salt may be, for example, a binary compound composed of an alkali metal and one element selected from Groups 13 to 17 of the Periodic Table of Elements. The alkali metal salt may be, for example, a ternary compound composed of an alkali metal and two elements selected from Groups 13 to 17 of the Periodic Table of Elements.

The alkali metal salt may be, for example, a lithium salt. The lithium salt binary compound may include, for example, Lil, LiBr, LiCl, LiF, LiH, Li₂O, Li₂Se, Li₂Te, Li₃N, Li₃P, Li₃As, Li₃Sb, Li₃Al₂, LiB₃, or a combination thereof. The lithium salt ternary compound may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof.

The alkali metal salt may be, for example, a sodium salt. The sodium salt binary compound may include, for example, Nal, NaBr, NaCl, NaF, Na₂O, Na₂Se, Na₃N, Na₃P, Na₃As, Na₃Sb, Na₃Al₂, NaB₃, or a combination thereof. The sodium salt ternary compound may include, for example, Na₃OCl, NaBF₄, NaPF₆, NaAsF₆, NaClO₄, NaNO₃, NaAlO₂, NaAlCl₄, NaNO₃, Na₂CO₃, NaBH₄, Na₂SO₄, Na₃BO₃, Na₃PO₄, Na₄NCl, Na₅NCl₂, Na₃BN₂, or a combination thereof. The ionic conductivity of the composite can be further improved by including the above-described lithium salt or sodium salt in the composite. This lithium salt or sodium salt can more easily form a solid solution with Na₂S in the composite.

The content of the alkali metal salt in the composite may be 1 to 40 wt%, 5 to 35 wt%, 10 to 35 wt%, 15 to 35 wt%, 20 to 35 wt%, or 25 to 35 wt% of the total weight of the composite. When the content of alkali metal salt increases excessively, the energy density of a secondary battery may decrease. When the content of alkali metal salt is too low, the ionic conductivity of the composite may decrease, and thus the internal resistance of the composite cathode active material. As a result, the cycle characteristics of a secondary battery may deteriorate.

The molar ratio of M₂S and alkali metal salt in the composite may be, for example, 50:50 to 95:5, 60:40 to 95:5, 60:40 to 90:10, 65:35 to 90:10, 65:35 to 85:15, or 70:30 to 85:15. The molar ratio of M₂S and alkali metal salt in the composite may be, for example, 50:50 to 95:5, 50:50 to 90:10, 50:50 to 85:15, 50:50 to 80:20, 50:50 to 75:25, or 50:50 to 70:30. Since the molar ratio of M₂S and alkali metal salt is within the range, the cycle characteristics of a secondary battery including the composite cathode active material can be further improved. When the molar ratio of M₂S is too high, the effect of improving ionic conductivity by an alkali metal salt may be slight. When the molar ratio of M₂S is too high, the energy density of a secondary battery including the composite cathode active material may decrease.

The molar ratio of Li₂S or Na₂S to lithium salt in the composite may be, for example, 50:50 to 95:5, 60:40 to 95:5, 60:40 to 90:10, 65:35 to 90:10, 65:35 to 85:15, or 70:30 to 85:15. The molar ratio of Li₂S or Na₂S to lithium salt in the composite may be, for example, 50:50 to 95:5, 50:50 to 90:10, 50:50 to 85:15, 50:50 to 80:20, 50:50 to 75:25, or 50:50 to 70:30. Since the molar ratio of Li₂S or Na₂S to lithium salt is within the range, the cycle characteristics of a secondary battery including the composite cathode active material can be further improved. When the molar ratio of Li₂S or Na₂S is too high, the effect of improving ionic conductivity by an alkali metal salt may be slight. When the molar ratio of Li₂S or Na₂ is too high, the energy density of a secondary battery including the composite cathode active material may decrease.

The content of the inorganic electronic conductive structure included in the composite may be, for example, 1 to 30 wt%, 1 to 20 wt%, 5 to 20 wt%, or 5 to 15 wt% of the total weight of the composite. When the content of the inorganic electronic conductive structure increases excessively, the energy density of a secondary battery may decrease. When the content of the inorganic electronic conductive structure decreases excessively, the ionic conductivity of the composite may decrease, and thus the internal resistance of the composite cathode active material. As a result, the cycle characteristics of a secondary battery may deteriorate.

In the XRD spectrum of the composite cathode active material according to an embodiment, peaks appear at a diffraction angle of 2θ = 14.5±0.5°, a diffraction angle of 2θ = 32.5±0.5°, and a diffraction angle of 2θ = 58.5±0.5° in relation to the crystal plane of molybdenum sulfide (MoS₂).

The peak appearing at a diffraction angle of 2θ = 14.5±0.5° is for the (002) crystal plane of molybdenum sulfide (MoS₂), so the diffraction angle 2θ is, for example, 14.1°. The peak appearing at a diffraction angle of 2θ = 32.5±0.5° is for the (100) crystal plane of molybdenum sulfide (MoS₂), so the diffraction angle 2θ is, for example, 32.9°. The peak appearing at a diffraction angle of 2θ = 58.5±0.5° is for the (110) crystal plane of molybdenum sulfide (MoS₂), so the diffraction angle 2θ is, for example, 58.8°.

In the X-ray diffraction spectrum (XRD) of the composite cathode active material, the first peak appearing at a diffraction angle of 2θ = 14.5±0.5°, the second peak appearing at a diffraction angle of 2θ = 32.5±0.5°, and the third peak appearing at a diffraction angle of 2θ = 58.5±0.5° may shift and appear to a low angle compared to the fourth peak appearing at a diffraction angle of 2θ = 14.5±0.5°, the fifth peak appearing at a diffraction angle of 2θ = 32.5±0.5°, and the sixth peak appearing at a diffraction angle of 2θ = 58.5±0.5° in the XRD spectrum of MoS₂ used in the preparation of the composite, respectively. As the composite is formed during a milling process, more low-angle shift occurs.

For example, the position of the first peak may shift to a low angle compared to the position of the second peak. In addition, the intensity of the first peak appearing at a diffraction angle of 2θ = 14.5±0.5° is reduced compared to the intensity of the second peak appearing at a diffraction angle of 2θ = 14.5±0.5° in the XRD spectrum of MoS₂ used in the preparation of the composite.

In addition, the crystal change of MoS₂ material during the milling process may be observed on XRD. The lithium sulfide-MoS₂-SUS wire-molybdenum sulfide (MoS₂) composite may have a reduced crystallite size compared to lithium sulfide used in the preparation of the composite. Since the lithium sulfide-MoS₂-SUS wire-molybdenum sulfide (MoS₂) composite may have a reduced crystallite size, the volume change of the crystallites during charging and discharging is reduced, so the volume change of the composite including multiple crystallites during charging and discharging can be alleviated. The occurrence of defects such as cracks during the charging and discharging of the composite cathode active material including this composite can be suppressed. As a result, the cycle characteristics of an all-solid-state secondary battery including the composite cathode active material can be improved.

In the XRD spectrum of the composite, for example, a first lattice constant (d1) derived from the seventh peak appearing at a diffraction angle of 2θ = 27° ± 2.0° corresponding to the (111) crystal plane of M₂S may be greater than a second lattice constant (d2) derived from the eighth peak appearing at a diffraction angle of 2θ = 27° ± 2.0° corresponding to the (111) crystal plane of M₂S in the XRD spectrum of the composite used in the preparation the composite. The M₂S-alkali metal salt-inorganic electronic conductive structure composite has a greater lattice constant (d) than the M₂S used in the preparation of the composite, so alkali metal ions can be more easily transferred within the M₂S crystal structure of the composite. The ionic conductivity of the composite cathode active material including the composite can be further improved. The internal resistance of a secondary battery including the composite cathode active material can be reduced, and the cycle characteristics thereof can be improved. The difference between the first lattice constant (d1) and the second lattice constant (d2) may be 0.05 Å or more, 0.1 Å or more, 0.15 Å or more, 0.2 Å or more, or 0.25 Å or more. The size of the first lattice constant (d1) may be, for example, 5.78 Å or more, 5.80 Å or more, 5.82 Å or more, 5.85 Å or more, 5.90 Å or more, 5.95 Å or more, or 6.0 Å or more. As the composite has such a first lattice constant (d1), the ion conductivity of the composite cathode active material including the composite can be further improved The internal resistance of a secondary battery including the composite cathode active material can be reduced, and the cycle characteristics thereof can be improved.

In the XRD spectrum of the composite, for example, the seventh peak appearing at a diffraction angle of 2θ = 27° ± 2.0° corresponding to the (111) crystal plane of M₂S has a seventh diffraction angle, and in the XRD spectrum of M₂S used in the preparation of the composite, the eighth peak appearing at a diffraction angle of 2θ = 27° ± 2.0° corresponding to the (111) crystal plane of M₂S has an eighth diffraction angle, and the seventh diffraction angle may be smaller than the eighth diffraction angle. For example, the position of the seventh peak may shift to a low angle compared to the position of the eighth peak. The M₂S-alkali metal salt-inorganic electronic conductive structure composite may have a reduced crystallite size compared to M₂S used in the preparation of the composite. Since the M₂S-alkali metal salt-carbon-based material composite may have a reduced crystallite size, the volume change of the crystallites during charging and discharging is reduced, so the volume change of the composite including multiple crystallites during charging and discharging can be alleviated. The occurrence of defects such as cracks during the charging and discharging of the composite cathode active material including this composite can be suppressed. As a result, the cycle characteristics of a secondary battery including the composite cathode active material can be improved.

In the XRD spectrum of the composite, for example, the seventh peak appearing at a diffraction angle 2θ = 27° ± 2.0° corresponding to the (111) crystal plane of M₂S has a first full width at half maximum (FWHM1), in the XRD spectrum of M₂S used in the preparation of the composite, the eighth peak appearing at a diffraction angle 2θ = 27° ± 2.0° corresponding to the (111) crystal plane of M₂S has a second full width at half maximum (FWHM2), and the first full width at half maximum may be larger than the second full width at half maximum. Therefore, the M₂S-alkali metal salt-inorganic electronic conductive structure composite may have increased lattice strain compared to the M₂S used in the preparation of the composite. For example, since M₂S and an alkali metal salt forms a solid solution, the M₂S-alkali metal salt-inorganic electronic conductive structure composite may have increased lattice strain. Since the M₂S-alkali metal salt-inorganic electronic conductive structure composite has an increased full width at half maximum (FWHM) compared to the M₂S used in the preparation of the composite, the ionic conductivity of the composite cathode active material including the composite can be further improved. The internal resistance of a secondary battery including the composite cathode active material can be reduced, and the cycle characteristics thereof can be improved.

The first full width at half maximum may be, for example, 1° or more, 1.05° or more, 1.10° or more, or 1.15° or more. Since the composite has the first full width at half maximum within this range, the ionic conductivity of the composite cathode active material including the composite can be further improved. The internal resistance of a secondary battery including the composite cathode active material can be reduced, and the cycle characteristics thereof can be improved.

According to an embodiment, based on 100 parts by weight of the composite, the content of M₂S is 30 to 80 parts by weight, the content of the alkali metal salt is 1 to 40 parts by weight, the content of the inorganic electronic conductive structure is 1 to 30 parts by weight, 1 to 20 parts by weight, 1 to 10 parts by weight, or 1 to 4 parts by weight, and the content of the metal conductive material is 1 to 40 parts by weight, 1 to 30 parts by weight, 1 to 20 parts by weight, 1 to 10 parts by weight, or 1 to 4 parts by weight.

The particle size of the composite cathode active material, that is, the size of the composite particles, may be, for example, 2 µm or less, 1.5 µm or less, or 1 µm or less. The size of the composite particles may be, for example, 0.1 to 2 µm, 0.1 to 1.5 µm, or 0.1 to 1 µm. Since the composite particles have a size within this range, the volume change of the composite during charging and discharging is suppressed, and thus the deterioration of the composite cathode active material including the composite during charging and discharging can be suppressed. When the size of the composite particles increases excessively, the volume change of the composite during charging and discharging increases, thereby accelerating the deterioration of the composite cathode active material including the composite. As a result, the cycle characteristics of a secondary battery including such composite cathode active material may be deteriorated.

Therefore, the cycle characteristics, for example, lifespan characteristics, of an all-solid-state secondary battery including the composite cathode active material can be improved. The size of the composite particles, for example, the particle size of the composite, may be measured, for example, using laser diffraction, scanning electron microscopy, or the like. The particle size of the composite is an arithmetic average value of the particle sizes of multiple particles measured from scanning electron microscope images using software.

By adding an alkali metal salt having ionic conductivity, an inorganic electronic conductive structure having electronic conductivity, and a metal conductive material to lithium sulfide particles, the composite can more easily perform electronic conduction from the surface of the composite to the interior of the composite. The internal resistance of a secondary battery including the composite cathode active material can be reduced, and the cycle characteristics thereof can be improved.

In the present specification, the length and diameter of the metal conductive material, and the length and thickness of the inorganic electronic conductive structure may be measured from a scanning electron microscope (SEM) image or an optical microscope.

The composite may include, for example, 10 to 80 parts by weight of M₂S, 1 to 40 parts by weight of an alkali metal salt, 1 to 20 parts by weight of an inorganic electronic conductive structure, and 0.1 to 3 parts by weight of a metal conductive material, based on 100 parts by weight of the composite. The content of M₂S included in the composite may be, for example, 10 to 80 parts by weight, 20 to 70 parts by weight, 30 to 60 parts by weight, or 40 to 60 parts by weight, based on 100 parts by weight of the composite. The content of the alkali metal salt included in the composite may be, for example, 10 to 40 parts by weight, 15 to 40 parts by weight, 20 to 40 parts by weight, or 25 to 35 parts by weight, based on 100 parts by weight of the composite.

The content of the metal conductive material included in the composite is 0.1 to 40 parts by weight, 0.1 to 30 parts by weight, 0.1 to 20 parts by weight, 0.1 to 10 parts by weight, 0.1 to 5 parts by weight, or 0.1 to 3 parts by weight, based on 100 parts by weight of the composite. In addition, the content of the inorganic electronic conductive structure may be 1 to 30 parts by weight, 1 to 20 parts by weight, 5 to 20 parts by weight, or 5 to 15 parts by weight, based on 100 parts by weight of the composite. Since the composite includes the M₂S, alkali metal salt, metal conductive material, and inorganic electronic conductive structure within these ranges, the composite cathode active material including the composite can provide excellent ionic conductivity and/or electronic conductivity.

The composite of the M₂S, alkali metal salt, and two-dimensional inorganic electronic conductive structure may further include a carbon-based material.

The ionic conductivity of the composite may be, for example, 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more at 25 °C. The Ionic conductivity may be measured using, for example, electrochemical impedance spectrometry, a DC polarization method, or the like. Since the composite has an ionic conductivity within this range, the internal resistance of the composite cathode active material including the composite can be reduced. The cycle characteristics of a secondary battery including the composite cathode active material can be improved. The electronic conductivity of the composite may be, for example, 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more at 25 °C. The electronic conductivity may be measured using, for example, electrochemical impedance spectrometry, a DC polarization method, or the like. Since the composite has an electronic conductivity within this range, the internal resistance of the composite cathode active material including the composite can be reduced. The initial efficiency, electrode energy density, and lifespan characteristics of an all-solid-state secondary battery including the composite cathode active material can be improved.

### [Cathode]

### [Cathode: cathode active material]

A cathode according to an embodiment includes: a cathode current collector; and a cathode active material layer disposed on one side or both sides of the cathode current collector The cathode active material layer includes the above-described composite cathode active material, and may further include a solid electrolyte. The cathode may have a further reduced internal resistance by including a composite cathode active material and a solid electrolyte. Therefore, the cycle characteristics of a secondary battery including the cathode can be further improved.

FIG. 1 schematically shows the structure of a cathode active material layer according to an embodiment. In FIG. 1, Li₂S is used as an example of M₂S, and Lil is used as an example of an alkali metal salt.

Referring to FIG. 1, the cathode active material layer includes Li₂S 1, Lil 2, an inorganic electronic conductive structure 3, and a metal conductive material 5. The metal conductive material 5 can enhance an electronic conductive network by connecting the Li₂S 1, Lil 2, and inorganic electronic conductive structure 3. As shown in FIG. 1, the relative size of the inorganic electronic conductive structure 3, Lil 2 and Li₂S 1 is 1≤2<3. When the inorganic electronic conductive structure has this size, the inorganic electronic conductive structure can effectively form a network imparting electronic conductivity between lithium sulfide insulators. The size of the inorganic electronic conductive structure refers to an average size.

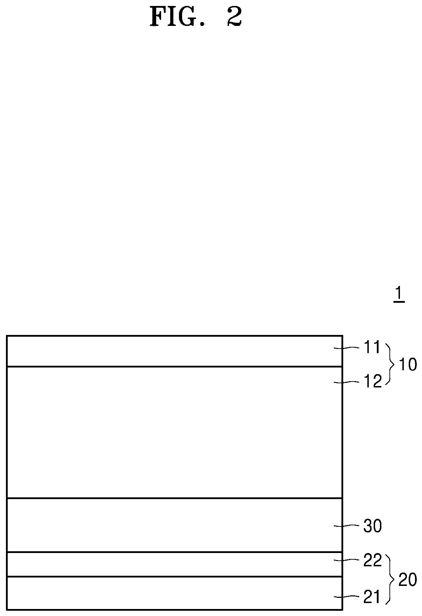

Referring to FIGS. 2 to 7, a cathode 10 includes: a cathode current collector 11; and a cathode active material layer 12 disposed on one or both sides of the cathode current collector 11. The cathode active material layer 12 includes the above-described composite cathode active material and a solid electrolyte.

The composite cathode active material may be included in an amount of 40 to 90 parts by weight, 40 to 80 parts by weight, 50 to 80 parts by weight, or 50 to 70 parts by weight based 100 parts by weight of the cathode active material layer 12. When the content of the composite cathode active material decreases excessively, the energy density of a secondary battery decreases. When the content of the composite cathode active material increases excessively, the deterioration of the cathode may be accelerated due to changes in the volume of the cathode during charging and discharging. As a result, the cycle characteristics of a secondary battery 1 may deteriorate.

The cathode active material layer 12 may additionally include other cathode active materials in addition to the above-described composite cathode active material.

Other cathode active materials may include, for example, Li₂S-containing composites. The Li₂S-containing composites include, for example, a composite of Li₂S and a carbon-based material, a composite of Li₂S, a carbon-based material and a solid electrolyte, a composite of Li₂S and a solid electrolyte, a composite of Li₂S and a lithium salt, a composite of Li₂S and a metal carbide, a composite of Li₂S, a carbon-based material and a metal carbide, a composite of Li₂S and a metal nitride, a composite of Li₂S, a carbon-based material and a metal nitride, or a combination thereof.

The composite of Li₂S and a carbon-based material includes a carbon-based material. The carbon-based material refers to the above-described carbon-based material of the composite cathode active material. The method of preparing the composite of Li₂S and a carbon-based material may be, but is not limited to, a dry method, a wet method, or a combination thereof, and any method used in the relevant technical field is possible. The method of preparing the composite of Li₂S and a carbon-based material include, but are not limited to, milling, heat treatment, and deposition, and any method used in the relevant technical field is possible.

The composite of Li₂S, a carbon-based material, and a solid electrolyte includes a carbon-based material and a solid electrolyte. The carbon-based material refers to the above-described composite of Li₂S and a carbon-based material. Any solid electrolyte that is used as an ion-conducting material in the relevant technical field is possible. The solid electrolyte is, for example, an inorganic solid electrolyte. The solid electrolyte may be, for example, a crystalline solid electrolyte, an amorphous solid electrolyte, or a combination thereof. The solid electrolyte is, for example, a sulfide-based solid electrolyte, an oxide-based solid electrolyte, a polymer solid electrolyte, or a combination thereof. The sulfide-based solid electrolyte contains, for example, Li, S, and P, and may optionally further contain a halogen element. The sulfide-based solid electrolyte may be selected from the sulfide-based solid electrolytes used in an electrolyte layer. The sulfide-based solid electrolyte may have, for example, an ionic conductivity of 1×10⁻⁵ S/cm or more at room temperature. The oxide-based solid electrolyte contains, for example, Li, O and a transition metal element, and may optionally contain other elements. The oxide-based solid electrolyte may be, for example, a solid electrolyte having an ionic conductivity of 1×10⁻⁵ S/cm or more at room temperature. The oxide-based solid electrolyte may be selected from the oxide-based solid electrolytes used in an electrolyte layer.

The composite of Li₂S and a solid electrolyte includes a solid electrolyte. The solid electrolyte refers to the above-described composite of Li₂S, a carbon-based material and a solid electrolyte.

The composite of Li₂S and lithium salt includes Li₂S and a lithium salt. The lithium salt refers to the lithium salt of the above-described composite cathode active material. The lithium salt is, particularly, at least one lithium halide compound selected from LiF, LiCl, LiBr, and Lil. The composite of Li₂S and a lithium salt may be, for example, a composite of Li₂S and a lithium halide. Since the composite of Li₂S and a lithium salt includes a lithium halide compound, improved ionic conductivity can be provided. The composite of Li₂S and a lithium salt is distinguished from a simple mixture of Li₂S, a carbon-based material, and a lithium salt. The simple mixture of Li₂S and a lithium salt may provide high interfacial resistance by failing to maintain a dense interface between Li₂S and a lithium salt, which may result in a deterioration in the lifespan characteristics of an all-solid-state secondary battery.

The composite of Li₂S and a metal carbide contains a metal carbide. The metal carbide is, for example, a two-dimensional metal carbide. The two-dimensional metal carbide is expressed, for example, as Mₙ₊₁CₙTₓ (where M is a transition metal, T is a terminal group, T is O, OH, and/or F, n=1, 2, or 3, and x is the number of terminal groups). The two-dimensional metal carbide is, for example, Ti₂CTₓ, (Ti₀.5, Nb₀.₅)₂CT_{X}, Nb₂CTₓ, V₂CTₓ, Ti₃C₂Tₓ, (V₀.5, Cr₀.₅)₃C₂Tₓ, Ti₃CNTₓ, Ta₄C₃Tₓ, Nb₄C₃Tₓ, or a combination thereof. The surface of the two-dimensional metal carbide is terminated with O, OH and/or F.

The composite of Li₂S and a carbon-based material and a metal carbide includes a carbon-based material and a metal carbide. The carbon-based material refers to the above-described composite of Li₂S and a carbon-based material. The metal carbide refers to the above-described composite of Li₂S and a metal carbide.

The composite of Li₂S and a metal nitride contains a metal nitride. The metal nitride is, for example, a two-dimensional metal nitride. The two-dimensional metal nitride is expressed, for example, as Mₙ₊₁NₙTₓ (where M is a transition metal, T is a terminal group, T is O, OH, and/or F, n=1, 2, or 3, and x is the number of terminal groups). The surface of the two-dimensional metal nitride is terminated with O, OH and/or F.

The composite of Li₂S, a carbon-based material and a metal nitride includes a carbon-based material and a metal nitride. The carbon-based material refers to the above-described composite of Li₂S and a carbon-based material. The metal carbide refers to the above-described composite of Li₂S and a metal nitride.

The cathode active material layer 12 may additionally include, for example, a sulfide compound that is distinct from the above-described cathode active material. The sulfide compound may be, for example, a compound containing a metal element other than Li and a sulfur element. The sulfide compound may be, for example, a compound containing a metal element belonging to Groups 1 to 14 of the Periodic Table of Elements with an atomic weight of 10 or more and a sulfur element. The sulfide compound may be, for example, FeS₂, VS₂, NaS, MnS, FeS, NiS, CuS, or a combination thereof. Since the cathode active material layer additionally includes a sulfide compound, the cycle characteristics of an all-solid-state secondary battery can be further improved. The content of such a sulfide compound included in the cathode active material layer 12 may be 10 wt% or less, 5 wt% or less, 3 wt% or less, or 1 wt% or less of the total weight of the cathode active material layer 12.

### [Cathode: solid electrolyte]

The cathode active material layer 12 may further include, for example, a solid electrolyte. The solid electrolyte may be, for example, a sulfide-based solid electrolyte. The solid electrolyte included in the cathode 10 may be the same as or different from the solid electrolyte included in the electrolyte layer 30. Details of the solid electrolyte, refer to the section of the electrolyte layer 30.

The solid electrolyte included in the cathode active material layer 12 may have a smaller average D50 particle diameter than the solid electrolyte included in the electrolyte layer 30. For example, the average particle size D50 of the solid electrolyte included in the cathode active material layer 12 may be 90 % or less, 80 % or less, 70 % or less, 60 % or less, 50 % or less, 40 % or less, 30 % or less, or 20 % or less of the average particle size D50 of the solid electrolyte included in the electrolyte layer 30. The average particle size D50 is, for example, a median particle diameter D50. The median particle diameter D50 is a size of the particle corresponding to 50% of the cumulative volume, calculated from the side of the particle with the smaller particle size in the size distribution of the particles measured by laser diffraction.

The solid electrolyte may be included in an amount of 10 to 60 parts by weight, 10 to 50 parts by weight, 20 to 50 parts by weight, or 30 to 50 parts by weight, based on 100 parts by weight of the cathode active material layer 12. When the content of the solid electrolyte decreases excessively, the internal resistance of the cathode may increase, and thus the cycle characteristics of a secondary battery can be deteriorated. When the content of the sulfide-based solid electrolyte increases excessively, the energy density of the secondary battery 1 may decrease.

### [Cathode: conductive material]

The cathode active material layer 12 may further include a conductive material. The conductive material may be, for example, a carbon-based conductive material, a metal-based conductive material, or a combination thereof. The carbon-based conductive material may be, but is not limited thereto, for example, graphite, carbon black, acetylene black, Ketjen black, carbon fiber, or a combination thereof, and any material used as a carbon-based conductive material in the relevant technical field may be used. The metal-based conductive material may be, but is not limited to, metal powder, metal fiber, or a combination thereof, and any material used as a metal-based conductive material in the relevant technical field may be used. The content of the conductive material included in the cathode active material layer 12 may be, for example, 1 wt% to 30 wt%, 1 wt% to 20 wt%, or 1 wt% to 10 wt% of the total weight of the cathode active material layer 12.

The cathode active material layer 12 includes a carbon-based material, and the carbon-based material may be placed only in the composite cathode active material. The cathode active material layer 12 may not additionally include another carbon-based material in addition to the composite cathode active material having the carbon-based material. Since the cathode active material layer does not include another carbon-based material, the energy density of the cathode and secondary battery 1 can be improved, and the manufacturing process thereof can be simplified.

### [Cathode: binder]

The cathode active material layer 12 may further include a binder. The binder may be, but is not limited to, styrene butadiene rubber (SBR), polytetrafluoroethylene, polyvinylidene fluoride, polyethylene, etc., and any binder used in the relevant technical field may be used. The content of the binder included in the cathode active material layer 12 may be, for example, 1 wt% to 10 wt% of the total weight of the cathode active material layer 12. The binder may be omitted.

### Cathode: other additives]

The cathode active material layer 12 may further include additives such as fillers, coating agents, dispersants, and ion conductive aids in addition to the above-described cathode active material, solid electrolyte, binder, and conductive material.

As fillers, coating agents, dispersants, and ion conductivity aids that can be included in the cathode active material layer 12, known materials generally used in electrodes of all-solid-state secondary batteries may be used.

### [Cathode: cathode current collector]

As the cathode current collector 11, a plate or foil made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used. The cathode current collector 11 may be omitted. The thickness of the cathode current collector 11 is, for example, 1 µm to 100 µm, 1 µm to 50 µm, 5 µm to 25 µm, or 10 µm to 20 µm.

The cathode current collector 11 may include, for example, a base film and a metal layer disposed on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. Since the base film includes an insulating thermoplastic polymer, when a short circuit occurs, the base film softens or liquefies, thereby blocking battery operation and suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer acts as an electrochemical fuse, and can thus be cut off in case of overcurrent to prevent short circuits. The limit current and maximum current can be controlled by adjusting the thickness of the metal layer. The metal layer may be plated or deposited on the base film. When the thickness of the metal layer decreases, the limit current and/or maximum current of the cathode current collector 11 decreases, so the stability of a lithium battery during a short circuit can be improved. A lead tab may be added to the metal layer for external connection. The lead tab may be welded to the metal layer or the metal layer/base film laminate by ultrasonic welding, laser welding, spot welding, or the like. During welding, while the base film and/or the metal layer melts, the metal layer may be electrically connected to the lead tab. To make the welding between the metal layer and the lead tab stronger, a metal chip may be added between the metal layer and the lead tab. The metal chip may be a thin piece of the same material as the metal of the metal layer. The metal chip may be, for example, a metal foil, a metal mesh, or the like. The metal chip may be, for example, aluminum foil, copper foil, SUS foil, or the like. Since the metal chip is disposed on the metal layer and then welded with the lead tab, the lead tab may be welded to a metal chip/metal layer laminate or a metal chip/metal layer/base film laminate. During welding, while the base film, the metal layer, and/or the metal chip melts, the metal layer or the metal layer/metal chip laminate may be electrically connected to the lead tab. A metal chip and/or a lead tab may be added onto a portion of the metal layer. The thickness of the base film may be, for example, 1 to 50 µm, 1.5 to 50 µm, 1.5 to 40 µm, or 1 to 30 µm. Since the base film has a thickness within this range, the weight of an electrode assembly may be reduced more effectively. The melting point of the base film may be, for example, from 100 to 300 °C, 100 to 250 °C, or 100 to 200 °C. Since the base film has a melting point within this range, the base film melts during the process of welding the lead tab, and may thus be easily bonded to the lead tab. Surface treatment, such as corona treatment, may be performed on the base film to improve adhesion between the base film and the metal layer. The thickness of the metal layer may be, for example, 0.01 to 3 µm, 0.1 to 3 µm, 0.1 to 2 µm, or 0.1 to 1 µm. Since the metal layer has a thickness within this range, the stability of an electrode assembly may be secured while maintaining conductivity. The thickness of the metal chip may be, for example, 2 to 10 µm, 2 to 7 µm, or 4 to 6 µm. Since the metal piece has a thickness within this range, the connection between the metal layer and the lead tab may be performed more easily. Since the cathode current collector 11 has this structure, the weight of the cathode may be reduced, and as a result, the energy density of the cathode and the lithium battery may be improved.

### [Cathode: inactive member]

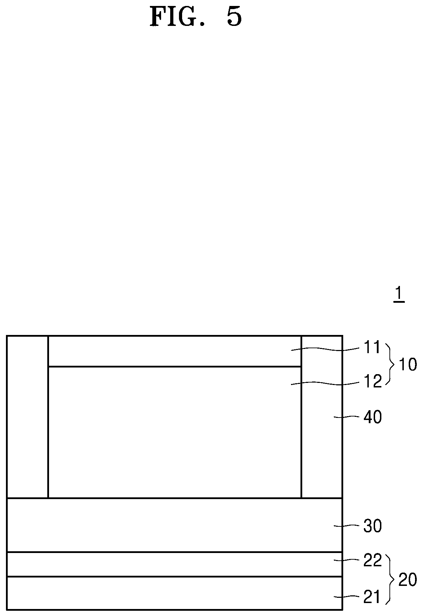

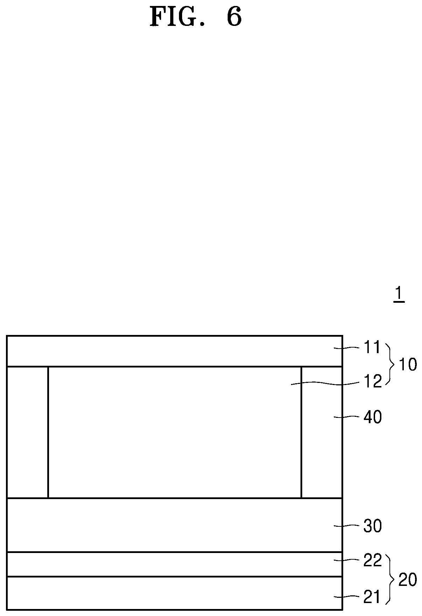

Referring to FIGS. 5 and 6, the cathode 10 includes a cathode current collector 11 and a cathode active material layer 12 disposed on one side of the cathode current collector 11. An inactive member 40 is placed on one side surface of the cathode 10. Referring to FIG. 5, the inactive member 40 is disposed on one side surface of the cathode active material layer 12 and one side surface of the cathode current collector 11. Referring to FIG. 6, the active member 40 is disposed on one side surface of the cathode active material layer 12 and is disposed between the solid electrolyte layer 30 and the cathode current collector 11 facing the solid electrolyte layer 30. The inactive member 40 may not be disposed on one side surface of the cathode current collector 11. The electrolyte layer 30 may be, for example, a solid electrolyte layer.

Since the cathode 10 includes the inactive member 40, cracks of the solid electrolyte layer 30 is prevented during the manufacturing and/or charging and discharging of the all-solid-state secondary battery 1, resulting in improved cycle characteristics of the all-solid-state secondary battery 1. In the all-solid-state secondary battery 1 that does not include the inactive member 40, when manufacturing and charging and/or discharging the all-solid-state secondary battery 1, uneven pressure is applied to the electrolyte layer 30 in contact with the cathode 10, thereby increasing the possibility of a short circuit occurring due to cracks occurring in the electrolyte layer 30 and the growth of lithium metal through the cracks.

The inactive member may be an elastic member.

In the all-solid-state secondary battery 1, the thickness of the inactive member 40 is greater than or equal to the thickness of the cathode active material layer 12. Alternatively, in the all-solid-state secondary battery 1, the thickness of the inactive member 40 is substantially equal to the thickness of the cathode 10. Since the thickness of the inactive member 40 is equal to the thickness of the cathode 10, a uniform pressure is applied between the cathode 10 and the electrolyte layer 30, and the cathode 10 and the electrolyte layer 30 are sufficiently adhered to each other, so that the interfacial resistance between the cathode 10 and the electrolyte layer 30 can be reduced. In addition, since the electrolyte layer 30 is sufficiently sintered during the process of manufacturing the all-solid-state secondary battery 1 by pressing, the internal resistance of the electrolyte layer 30 and the all-solid-state secondary battery 1 including the same is reduced.

The inactive member 40 surrounds the side surface of the cathode 10 and comes into contact with the electrolyte layer 30. Since the inactive member 40 surrounds the side surface of the cathode 10 and comes into contact with the solid electrolyte layer 30, cracks of the electrolyte layer 30 that occur due to a pressure difference during the pressing process in the electrolyte layer 30 that does not come into contact with the cathode 10 can be effectively suppressed. The inactive member 40 surrounds the side surface of the cathode 10 and is separated from the anode 20, more specifically, the first anode active material layer 22. The inactive member 40 surrounds the side surface of the cathode 10, comes into contact with the electrolyte layer 30, and is separated from the anode 20. Accordingly, the possibility of a short circuit occurring due to the physical contact between the cathode 10 and the first anode active material layer 22 or due to the overcharging of lithium is suppressed. For example, the inactive member 40 is disposed on one side surface of the cathode active material layer 12 and, at the same time, is disposed on one surface of the cathode current collector 11, thereby more effectively suppressing the possibility of a short circuit occurring due to the contact between the cathode current collector 11 and the anode 20.

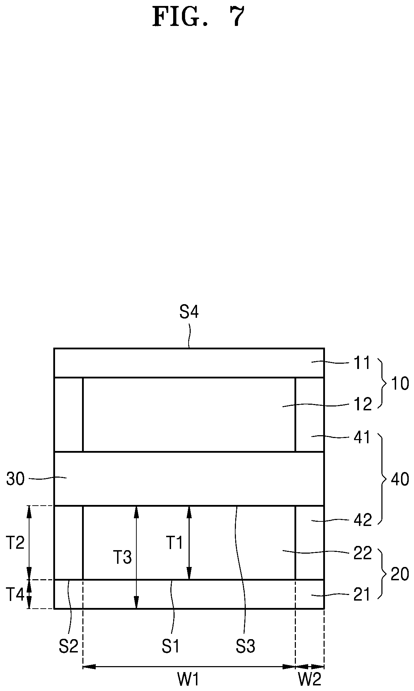

Referring to FIGS. 6 and 7, the inactive member 40 extends from one side surface of the cathode 30 to the end portion of the electrolyte layer 30. Since the inactive member 40 extends to the end portion of the electrolyte layer 30, cracks occurring at the end portion of the electrolyte layer 30 can be suppressed. The end portion of the electrolyte layer 30 is an outermost portion that comes into contact with the side surface of the electrolyte layer 30. The inactive member 40 extends to the outermost portion that comes into contact with the side surface of the electrolyte layer 30. The inactive member 40 is separated from the anode 20, more specifically, from the first anode active material layer 22. The inactive member 40 extends to the end portion of the electrolyte layer 30, but does not come into contact with the anode 20. The inactive member 40 fills a space extending from one side surface of the cathode 30 to the end portion of the electrolyte layer 30.

Referring to FIGS. 6 and 7, the width of the inactive member 40 extending from one side surface of the cathode 10 to the end of the electrolyte layer 30 is, for example, 1 to 30 %, 1 to 25 %, 1 to 20 %, 1 to 15 %, 1 to 10 %, or 1 to 5 % of the width between one side surface of cathode 10 and the other side surface facing the one side surface thereof. When the width of the inactive member 40 is too large, the energy density of the all-solid-state secondary battery 1 decreases. When the width of the inactive member 40 is too small, the effect of disposing the inactive member 40 is slight.

The area of the cathode 10 is smaller than the area of the electrolyte layer 30 in contact with the cathode 10. The inactive member 40 is disposed to surround the side surface of the cathode 10 to compensate for a difference between the area of the cathode 10 and the area of the electrolyte layer 30. Since the area of the inactive member 40 compensates for the difference between the area of the cathode 10 and the area of the electrolyte layer 30, cracks in the electrolyte layer 30 that occur due to the pressure difference during the pressing process are effectively suppressed. For example, the sum of the area of the cathode 10 and the area of the inactive member 40 is equal to the area of the electrolyte layer 30. The electrolyte layer 30 may be, for example, a solid electrolyte layer.

The area of the cathode 10 is, for example, less than 100%, 99% or less, 98% or less, 97% or less, 96% or less, or 95% or less of the area of the electrolyte layer 30. The area of the cathode 10 is, for example, less than 50% to 100%, 50% to 99%, 55% to 98%, 60% to 97%, 70% to 96%, 80% to 95%, or 85% to 95% of the area of the electrolyte layer 30.

When the area of the cathode 10 is equal to or larger than the area of the electrolyte layer 30, the possibility of a short circuit occurring due to physical contact between the cathode 10 and the first anode active material layer 22 or overcharging of lithium increases. The area of the cathode 10 is, for example, equal to the area of the cathode active material layer 12. The area of the cathode 10 is, for example, equal to the area of the cathode current collector 11.

The area of the inactive member 40 is, for example, 50% or less, 40% or less, 30% or less, 20% or less, or 10% or less of the area of the cathode 10. The area of the inactive member 40 is, for example, 1% to 50%, 5% to 40%, 5% to 30%, 5% to 20%, or 5% to 15% of the area of the cathode 10.

The area (S1) of the cathode 10 is smaller than the area (S4) of the anode current collector 21. The area (S1) of the cathode 10 is, for example, less than 100%, 99% or less, 98% or less, 97% or less, 96% or less, or 95% or less of the area (S4) of the anode current collector 21. The area (S1) of the cathode 10 is, for example, less than 50% to 100%, 50% to 99%, 55% to 98%, 60% to 97%, 70% to 96%, 80% to 95%, or 85% to 95% of the area (S4) of the anode current collector 21. The area (S4) of the anode current collector 21 is, for example, equal to the area of the anode 20. The area (S4) of the anode current collector 21 is, for example, equal to the area of the first anode active material layer 22.

In the present disclosure, the "same" area, length, width, thickness and/or shape includes all instances of having "substantially the same" area, length, width, thickness and/or shape, except where the area, length, width, thickness and/or shape are intentionally different from each other. The "same" area, length, width and/or thickness includes a range where the unintended difference in area, length, width and/or thickness of the objects being compared is, for example, less than 3%, less than 2%, less than 1%, less than 0.5%, or less than 0.1%.

The thickness of the inactive member 40 is, for example, greater than the thickness of the first anode active material layer 22. The thickness of the first anode active material layer 22 is, for example, 50% or less, 40% or less, 30% or less, 20% or less, or 10% or less of the thickness of the inactive member 40. The thickness of the first anode active material layer 22 is, for example, 1% to 50%, 1% to 40%, 1% to 30%, 1% to 20%, or 1% to 10% of the thickness of the inactive member 40.

The inactive member 40 may be a gasket. Since a gasket is used as the inactive member 40, cracks of the electrolyte layer 30 that occur due to a pressure difference during a pressing process can be effectively suppressed.

The inactive member 40 has, for example, a single-layer structure. Alternatively, although not shown in the drawings, the inactive member 40 may have a multilayer structure. In the inactive member 40 having a multilayer structure, each layer may have a different composition. The inactive member having a multilayer structure may have, for example, a two-layer structure, a three-layer structure, a four-layer structure, or a five-layer structure. The inactive member 40 having a multilayer structure may include, for example, at least one adhesive layer and at least one support layer. The adhesive layer effectively prevents a gap between the cathode 10 and the solid electrolyte layer 30 due to a change in the volume of the cathode 10 that occurs during the charging and discharging process of an all-solid-state secondary battery 10, and provides a bonding force between the support layer and another layer, thereby improving the film strength of the inactive member 40. The support layer provides a supporting force to the inactive member 40, prevents unevenness of pressure applied to the electrolyte layer 30 during a pressing process or a charging and discharging process, and prevents the deformation of the all-solid-state secondary battery 1 to be manufactured.

The inactive member 40 is, for example, a flame-retardant inactive member. Since the flame-retardant inactive member provides flame retardancy, the possibility of thermal runaway and ignition of the all-solid-state secondary battery 1 can be prevented. As a result, the safety of the all-solid-state secondary battery 1 is further improved. Since the flame-retardant inactive member absorbs residual moisture in the all-solid-state secondary battery 1, the deterioration of the all-solid-state secondary battery 1 is prevented, and thus the lifespan characteristics of the all-solid-state secondary battery 1 are improved.

The flame-retardant inactive member includes, for example, a matrix and a filler. The matrix includes, for example, a substrate and a stiffener. The matrix includes, for example, a fibrous substrate and a fibrous stiffener. The matrix may have elasticity by including a substrate. Therefore, the matrix can effectively accommodate the volume change during charging and discharging of the all-solid-state secondary battery 1 and can be disposed at various positions. The substrate included in the matrix includes, for example, a first fibrous material. Since the substrate includes the first fibrous material, a change in the volume of the cathode 30, occurring during the charging and discharging process of the all-solid-state secondary battery 1, can be effectively accommodated, and the deformation of the inactive member 40 due to the volume change of the cathode 30 may be effectively suppressed. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. Since the first fibrous material is an insulating material, a short circuit between the cathode 30 and the anode 20 due to lithium dendrites, or the like, occurring during the charging and discharging process of the all-solid-state secondary battery 1, can be effectively prevented. The first fibrous material includes, for example, at least one selected from a pulp fiber, an insulating polymer fiber, and an ion-conducting polymer fiber. Since the matrix includes the stiffener, the strength of the matrix is improved. Therefore, the matrix can prevent an excessive volume change during the charging and discharging of the all-solid-state secondary battery 1 and prevent the deformation of the all-solid-state secondary battery 1. The stiffener included in the matrix includes, for example, a second fibrous material. Since the stiffener includes the second fibrous material, the strength of the matrix can be increased more uniformly. The second fibrous material is, for example, a material having an aspect ratio of 3 or more, 5 or more, or 10 or more. The first fibrous material is, for example, a material having an aspect ratio of 3 to 100, 5 to 100, or 10 to 100. The second fibrous material is, for example, a flame-retardant material. Since the second fibrous material is a flame-retardant material, ignition due to thermal runaway occurring during the charging and discharging process of the all-solid-state secondary battery 1 or due to external impact can be effectively suppressed. The second fibrous material includes, for example, a glass fiber, a metal oxide fiber, a ceramic fiber, or the like.

The flame-retardant inactive member includes a filler in addition to the matrix. The filler may be disposed within the matrix, on the surface of the matrix, or both within the matrix and on the surface of the matrix. The filler is, for example, an inorganic material. The filler included in the flame-retardant inactive member is, for example, a moisture getter. The filler removes moisture remaining in the all-solid-state secondary battery 1 by adsorbing moisture at a temperature of, for example, lower than 100°C, thereby preventing the deterioration of the all-solid-state secondary battery 1. In addition, when the temperature of the all-solid-state secondary battery 1 increases to 150°C or higher due to thermal runaway that occurs during the charging and discharging process of the all-solid-state secondary battery 1 or due to external impact, the filler can effectively suppress the ignition of the all-solid-state secondary battery 1 by desorbing the adsorbed moisture. That is, the filler is, for example, a flame retardant. The filler is, for example, a metal hydroxide having moisture adsorption properties. The metal hydroxide included in the filler is, for example, Mg(OH)₂, Fe(OH)₃, Sb(OH)₃, Sn(OH)₄, Tl(OH)₃, Zr(OH)₄, Al(OH)₃, or a combination thereof. The content of the filler included in the flame-retardant inactive member is, for example, 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight, based on 100 parts by weight of the flame-retardant inactive member.

The flame retardant inactive member may further include, for example, a binder. The binder may include, for example, a curable polymer or a non-curable polymer. The curable polymer is a polymer that is cured by heat and/or pressure. The curable polymer is, for example, solid at room temperature. The flame-retardant inactive member 40 includes, for example, a heat-pressing curable film and/or a cured product thereof. The heat-pressing curable film is, for example, TSA-66 of Toray Co., Ltd.

The flame-retardant inactive member may additionally include other materials in addition to the above-described substrate, stiffener, filler, and binder. The flame-retardant inactive member may further include, for example, at least one selected from paper, an insulating polymer, an ion-conducting polymer, an insulating inorganic material, an oxide-based solid electrolyte, and a sulfide-based solid electrolyte. The insulating polymer may be an olefinic polymer such as polypropylene (PP) or polyethylene (PE).

The density of the substrate or stiffener included in the flame-retardant inactive member may be, for example, 10% to 300%, 10% to 150%, 10% to 140%, 10% to 130%, or 10% to 120% of the density of the cathode active material included in the lithium host layer 22.

The inactive member 40 is a member that does not include a material having electrochemical activity, for example, an electrode active material. The electrode active material is a material that absorbs/desorbs lithium. The inactive member 40 is a member made of a material other than an electrode active material and used in the relevant technical field.

### [All-solid-state secondary battery]

All-solid-state secondary battery according to an embodiment includes a cathode; an anode; and an electrolyte layer disposed between the cathode and the anode. The anode includes an anode current collector and a first anode active material layer disposed on one surface of the anode current collector.

The anode includes an anode current collector and a lithium host layer disposed on one side of the anode current collector, the lithium host layer includes a lithium host structure, the lithium host structure includes at least one lithium host, the lithium host includes a carbon-based lithium host, a metal-based lithium host, a polymer-based lithium host, or a combination thereof, and the solid secondary battery includes a first inactive member disposed on one side of the anode.

The all-solid-state secondary battery includes a lithium-containing sulfide-based cathode active material as the cathode active material. Therefore, the disconnection of the ion and/or electron transfer path due to a volume increase of a lithium-free sulfide-based cathode active material, such as sulfur (S), during initial discharging is prevented. Since the disconnection of this ion and/or electron transfer path is prevented, the cycle characteristics of the all-solid-state secondary battery are improved.

Since the anode of the all-solid-state secondary battery includes a lithium host layer, the non-uniformity of lithium deposition can be suppressed by acting a lithium host as a support during the process of lithium metal deposition on the anode. The formation and growth of lithium dendride and/or isolated lithium (dead lithium) can be suppressed during the charging-discharging process of the all-solid-state secondary battery. As a result, the deterioration of the all-solid-state secondary battery is suppressed, and the cycle characteristics thereof are improved.

Since the anode of the all-solid-state secondary battery includes a lithium host layer, a rapid volume change of the anode can be suppressed during the charging-discharging process of the all-solid-state secondary battery. Since the rapid volume change of the anode, the deterioration of the all-solid-state secondary battery is suppressed and the cycle characteristics thereof are improved due to a volume change of the all-solid-state secondary battery during the charging-discharging process of the all-solid-state secondary battery.

Since the all-solid-state secondary battery includes a solid electrolyte layer, the movement of polysulfide to the anode occurring during the charging and discharging of the lithium-containing sulfide-based cathode active material is blocked. Therefore, a side reaction between polysulfide and the anode active material is suppressed.

Since the inactive member is disposed on one side surface of the anode, a short circuit between the cathode and the lithium dendrites generated and grown during the charging and discharging of the all-solid-state secondary battery and/or the lithium metals melted at high temperatures is more effectively suppressed. As a result, the short circuit of the all-solid-state secondary battery is prevented, and the lifespan characteristics thereof are improved.

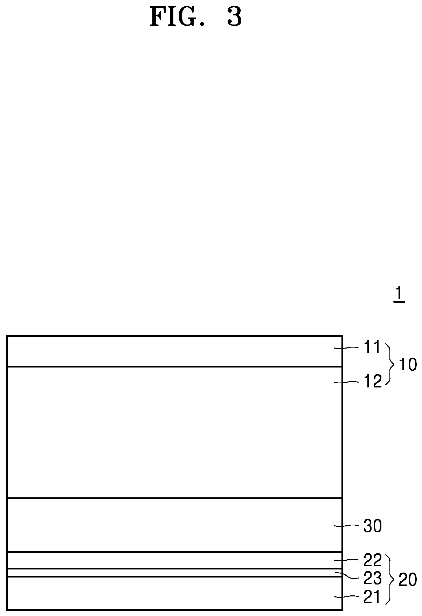

Referring to FIGS. 3 to 7, an all-solid-state secondary battery 1 includes a cathode layer 10; an anode layer 20; and an electrolyte layer 30 disposed between the cathode layer 10 and the anode layer 20. The anode layer 20 includes an anode current collector 21 and a first anode active material layer 22 disposed on one surface of the anode current collector 21.

### [Cathode]

Refer to the above-described cathode.

### [Anode]

### [Anode: anode active material]

Referring to FIGS. 3 to 7, the anode 20 includes a first anode active material layer 22. The first anode active material layer 22 includes, for example, an anode active material and a binder.

The anode active material included in the first anode active material layer 22 is, for example, an anode material capable of forming an alloy or compound with lithium.

The anode active material included in the first anode active material layer 22 has, for example, a particle shape. The average particle size of the anode active material having a particle shape is, for example, 4 µm or less, 3 *µ*m or less, 2 µm or less, 1 µm or less, 500 nm or less, 300 nm or less, or 100 nm or less. The average particle size of the anode active material having a particle shape is, for example, 10 nm to 4 µm, 10 nm to 3 µm, 10 nm to 2 µm, 10 nm to 1 µm, 10 nm to 500 nm, 10 nm to 300 nm or 10 nm to 100 nm. Since the anode active material has an average particle size in this range, reversible absorption and/or desorption of lithium can be facilitated during charging and discharging. The average particle size of the anode active material is, for example, a median diameter (D50) measured using a laser particle size distribution meter.

The anode active material included in the first anode active material layer 22 includes, for example, at least one selected from a carbon-based anode active material and a metal or metalloid anode active material.

The carbon-based anode active material includes, for example, amorphous carbon, crystalline carbon, porous carbon, or a combination thereof.

The carbon-based anode active material is, particularly, amorphous carbon. The amorphous carbon may be, but is not limited to, carbon black (CB), acetylene black (AB), furnace black (FB), ketjen black (KB), and graphene, and any material classified as amorphous carbon in the relevant technical field may be used. The amorphous carbon is carbon that has no crystallinity or very low crystallinity and is distinguished from crystalline carbon or graphitic carbon.

The carbon-based anode active material may be, for example, porous carbon. The pore volume of pores included in the porous carbon is, for example, 0.1 cc/g to 10.0 cc/g, 0.5 cc/g to 5 cc/g, or 0.1 cc/g to 1 cc/g. The average pore diameter of pores included in the porous carbon is, for example, 1 nm to 50 nm, 1 nm to 30 nm, or 1 nm to 10 nm. The BET specific surface area of the porous carbon is, for example, 100 m²/g to 3000 m²/g.

The metal or metalloid anode active material includes, but is not necessarily limited to, at least one selected from the group consisting of gold (Au), platinum (Pt), palladium (Pd), silicon (Si), silver (Ag), aluminum (Al), bismuth (Bi), tin (Sn), and zinc (Zn), and any metal or metalloid anode active material that forms an alloy or compound with lithium in the relevant technical field may be used. For example, nickel (Ni) does not form an alloy with lithium and is therefore not a metal anode active material.

The first anode active material layer 22 includes a type of anode active material among these anode active materials or a mixture of a plurality of different anode active materials. For example, the first anode active material layer 22 includes only amorphous carbon, or includes at least one selected from the group consisting of gold (Au), platinum (Pt), palladium (Pd), silicon (Si), silver (Ag), aluminum (Al), bismuth (Bi), tin (Sn), and zinc (Zn). Alternatively, the first anode active material layer 22 includes a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold, etc., is, for example, 99:1 to 1:99, 10:1 to 1:2, 5:1 to 1:1, or 4:1 to 2:1 by weight ratio, but is not necessarily limited to this range and is selected according to the characteristics of the required all-solid-state secondary battery 1. Since the anode active material has this composition, the cycle characteristics of the all-solid-state secondary battery 1 are further improved.

The anode active material included in the first anode active material layer 22 includes, for example, a mixture of first particles made of amorphous carbon and second particles made of a metal or metalloid. The metal or metalloid includes, for example, gold (Au), platinum (Pt), palladium (Pd), silicon (Si), silver (Ag), aluminum (Al), bismuth (Bi), tin (Sn), and zinc (Zn). The metalloid, alternatively, is a semiconductor. The content of the second particles is 1 to 99 wt%, 1 to 60 wt%, 8 to 60 wt%, 10 to 50 wt%, 15 to 40 wt%, or 20 to 30 wt% based on the total weight of the mixture. Since the second particles have a content in this range, the cycle characteristics of the all-solid-state secondary battery 1 are further improved.

Alternatively, the first anode active material layer 22 includes a composite anode active material. The composite anode active material may include, for example, a carbon-based support and a metal-based anode active material supported on the carbon-based support. Since the composite anode active material has this structure, the localization of the metal-based anode active material in the first anode active material layer can be prevented, and a uniform distribution can be obtained. As a result, the cycle characteristics of the all-solid-state secondary battery 1 including the first anode active material layer 22 are further improved.

The metal-based anode active material supported on the carbon-based support includes, for example, a metal, a metal oxide, a composite of a metal and a metal oxide, or a combination thereof. The metal includes, for example, gold (Au), platinum (Pt), palladium (Pd), silicon (Si), silver (Ag), aluminum (Al), bismuth (Bi), tin (Sn), tellurium (Te), and zinc (Zn). The metal oxide includes, for example, gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or a combination thereof. The composite of the metal and the metal oxide may include, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or a combination of thereof.

The carbon-based support is, for example, amorphous carbon. The amorphous carbon may be, but is not limited to, carbon black (CB), acetylene black (AB), furnace black (FB), ketjen black (KB), graphene, activated carbon, carbon nanofibers (CNF), and carbon nanotubes (CNT), and any material classified as amorphous carbon in the relevant technical field may be used. The amorphous carbon is carbon that has no crystallinity or very low crystallinity and is distinguished from crystalline carbon or graphitic carbon. Carbonaceous materials are, for example, carbon-based anode active materials.

The composite anode active material has, for example, a particle shape. The particle size of the composite anode active material having a particle shape is, for example, 10 nm to 4 µm, 10 nm to 1 µm, 10 nm to 500 nm, 10 nm to 200 nm, or 10 nm to 100 nm. Since the composite anode active material has a particle size in this range, reversible absorption and/or desorption of lithium can be facilitated during charging and discharging. The metal-based anode active material supported on the support may have, for example, a particle shape. The particle size of the metal-based anode active material may be, for example, 1 nm to 200 nm, 1 nm to 150 nm, 5 nm to 100 nm, or 10 nm to 50 nm. The carbon-based support may, for example, have a particle shape. The particle size of the carbon-based support may be, for example, 10 nm to 2 µm, 10 nm to 1 µm, 10 nm to 500 nm, 10 nm to 200 nm or 10 nm to 100 nm. Since the carbon-based support has a particle size in this range, it can be more uniformly disposed within the first anode active material layer. The carbon-based support may be, for example, a nanoparticle having a particle size of 500 nm or less. The particle size of the composite anode active material, the particle size of the metal-based anode active material, and the particle size of the carbon-based support are, for example, average particle sizes. The average particle size is, for example, a median diameter (D50) measured using a laser particle size distribution meter. Alternatively, the average particle size may be determined automatically using software from electron microscope images, or may be determined manually by hand.

### [Anode: binder]

The binder included in the first anode active material layer 22 may be, but is not necessarily limited to, for example, styrene-butadiene rubber (SBR), polytetrafluoroethylene, polyvinylidene fluoride, polyethylene, vinylidene fluoride/hexafluoropropylene copolymer, polyacrylonitrile, or polymethyl methacrylate, and any binder used in the relevant technical field may be used. The binder may consist of a single binder or a plurality of different binders.

Since the first anode active material layer 22 includes the binder, the first anode active material layer 22 is stabilized on the anode current collector 21. In addition, cracks of the first anode active material layer 22 are suppressed despite changes in the volume and/or relative position of the first anode active material layer 22 during a charging and discharging process. For example, when the first anode active material layer 22 does not include the binder, it is possible for the first anode active material layer 22 to be easily separated from the anode current collector 21. As the first anode active material layer 22 is detached from the anode current collector 21, the possibility of a short circuit occurring increases when the anode current collector 21 comes into contact with the electrolyte layer 30 at the exposed portion of the anode current collector 21. The first anode active material layer 22 is prepared by, for example, applying a slurry, in which materials constituting the first anode active material layer 22 are dispersed, onto the anode current collector 21 and drying the applied slurry. Stable dispersion of the anode active material in the slurry is possible by including a binder in the first anode active material layer 22. For example, when applying the slurry onto the anode current collector 21 by screen printing, it is possible to suppress the clogging of a screen (e.g., clogging of the anode active material by aggregates).

### [Anode: other additives]

The first anode active material layer 22 may further include additives used in a conventional all-solid-state secondary batteries 1, such as a filler, a coating agent, a dispersant, and an ion conductive aid.

### [Anode: solid electrolyte]

The first anode active material layer 22 may further include a solid electrolyte. The solid electrolyte may be, for example, a material selected from the solid electrolytes included in the solid electrolyte layer 30. The solid electrolyte included in the first anode active material layer 22 may act as a reaction point where the formation of lithium metal begins in the first anode active material layer 22, a space where the formed lithium metal is stored, or a path for transferring lithium ions. The solid electrolyte may be omitted.

In the first anode active material layer 22, the content of the solid electrolyte may be high in a region adjacent to the electrolyte layer 30 and may be low in a region adjacent to the anode current collector 21. In the first anode active material layer 22, the solid electrolyte may have a concentration gradient in which the concentration of the solid electrolyte decreases from a region adjacent to the electrolyte layer 30 to a region adjacent to the anode current collector 21.

### [Anode: first anode active material layer]

The ratio (B/A) of the initial charge capacity (B) of the first anode active material layer 22 to the initial charge capacity (A) of the cathode active material layer is, for example, 0.005 to 0.45. The initial charge capacity of the anode active material layer 12 is determined at a maximum charge voltage for Li/Li⁺ from a 1st open circuit voltage. The initial charge capacity of the first anode active material layer 22 is determined at a voltage of 0.01 V for Li/Li⁺ from a 2nd open circuit voltage.

The maximum charge voltage is determined by the type of a cathode active material. The maximum charge voltage may be, for example, 1.5 V, 2.0 V, 2.5 V, 3.0 V, 3.5 V, 4.0 V, 4.2 V, or 4.3 V. For example, the maximum charge voltage of Li₂S or a Li₂S composite may be 2.5 V for Li/Li⁺. For example, the maximum charge voltage of Li₂S or a Li₂S composite may be 3.0 V for Li/Li⁺. The ratio (B/A) of the initial charge capacity (B) of the first anode active material layer 22 to the initial charge capacity (A) of the cathode active material layer is, for example, 0.01 to 0.3, 0.01 to 0.2, or 0.05 to 0.1. The initial charge capacity (mAh) of the cathode active material layer 12 is obtained by multiplying the charge capacity density (charge specific capacity) (mAh/g) of the cathode active material by the mass (g) of the cathode active material in the cathode active material layer 12. When several types of cathode active materials are used, values of charge capacity density x mass is calculated for all cathode active materials, and the sum of these values is an initial charge capacity of the cathode active material layer 12. The initial charge capacity of the first anode active material layer 22 is also calculated in the same way. The initial charge capacity of the first anode active material layer 22 is obtained by multiplying the charge capacity density (mAh/g) of the anode active material by the mass of the anode active material in the first anode active material layer 22. When several types of anode active materials are used, values of charge capacity density x mass is calculated for all anode active materials, and the sum of these values is an initial charge capacity of the anode active material layer 22. The charge capacity density of each of the cathode active materials and anode active materials may be measured by using an all-solid-state half-cell using lithium metal as a counter electrode. The initial charge capacity of each of the cathode active material layer 12 and the first anode active material layer 22 may be directly measured using an all-solid-state half-cell at a constant current density of, for example, 0.1 mA/cm². For the cathode, the measurements may be performed for an operating voltage from the first open circuit voltage (OCV) to the maximum charge voltage, for example, 3.0 V (vs. Li/Li+). For the anode, the measurements may be performed for an operating voltage from the second open circuit voltage (OCV) to a voltage of 0.01 V for the anode, for example, lithium metal. For example, the all-solid-state half-cell having the cathode active material layer may be charged from the first open circuit voltage to 3.0 V with a constant current of 0.1 mA/cm², and the all-solid-state half-cell having the first anode active material layer may be charged from the second open circuit voltage to 0.01 V with a constant current of 0.1 mA/cm². The current density during constant current charging may be, for example, 0.2 mA/cm² or 0.5 mA/cm². The all-solid-state half-cell having the cathode active material layer may be charged from the first open circuit voltage to 2.5 V, 2.0 V, 2.5 V, 2.8 V, 3.0 V, 3.5 V, or 4.0 V. The maximum charge voltage of the cathode active material layer may be determined by the maximum voltage of the battery satisfying the safety conditions according to JISC8712:2015 of the Japanese Standards Association.

When the initial charge capacity of the first anode active material layer 22 is too small, the thickness of the first anode active material layer 22 becomes very thin, so that lithium dendrites formed between the first anode active material layer 22 and the anode current collector 21 during repeated charging and discharging processes collapse the first anode active material layer 22, thus making it difficult to improve the cycle characteristics of the all-solid-state secondary battery 1. When the charge capacity of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1.

The thickness of the first anode active material layer 22 is, for example, 50% or less, 40% or less, 30% or less, 20% or less, 10% or less, or 5% or less of the thickness of the cathode active material layer 12. The thickness of the first anode active material layer 22 is, for example, 1 to 50 %, 1 to 40 %, 1 to 30 %, 1 to 20 %, 1 to 10 %, or 1 to 5 % of the thickness of the cathode active material layer 12. The thickness of the first anode active material layer 22 is, for example, 1 µm to 20 µm, 2 µm to 15 µm, or 3 µm to 10 µm. When the thickness of the first anode active material layer 22 is too thin, lithium dendrites formed between the first anode active material layer 22 and the anode current collector 21 collapse the first anode active material layer 22, thus making it difficult to improve the cycle characteristics of the all-solid-state secondary battery 1. When the thickness of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1. When the thickness of the first anode active material layer 22 decreases, for example, the initial charge capacity of the first anode active material layer 22 also decreases.

### [Anode: second anode active material layer]

Referring to FIG.5, the all-solid-state secondary battery 1 further includes, for example, a second anode active material layer 24 disposed between the anode current collector 21 and the first anode active material layer 22, after being charged. The second anode active material layer 24 is a metal layer including lithium or a lithium alloy. The metal layer includes lithium or a lithium alloy. Therefore, the second anode active material layer is a metal layer including lithium and thus acts as a lithium reservoir. The lithium alloy may be, but is not limited to, a Li-Al alloy, a Li-Sn alloy, a Li-In alloy, a Li-Ag alloy, a Li-Au alloy, a Li-Zn alloy, a Li-Ge alloy, or a Li-Si alloy, and any lithium alloy used in the relevant technical field may be used. The second anode active material layer 24 may be composed of one of these alloys or of lithium, or may be composed of several types of alloys. The second anode active material layer 24 is, for example, a plated layer. The second anode active material layer 24 is deposited between the first anode active material layer 22 and the anode current collector 21 during the charging process of the all-solid-state secondary battery 1.

The thickness of the second negative electrode active material layer 24 is, but is not particularly limited, for example, 1 µm to 500 µm, 1 µm to 200 µm, 1 µm to 150 µm, 1 µm to 100 µm, or 1 µm to 50 µm. When the thickness of the second anode active material layer 24 is too thin, it is difficult for the second anode active material layer 24 to act as a lithium reservoir. When the thickness of the second anode active material layer 24 is too thick, the mass and volume of the all-solid-state secondary battery 1 may increase, and the cycle characteristics of the all-solid-state secondary battery 1 may rather deteriorate.

Alternatively, in the all-solid-state secondary battery 1, the second anode active material layer 24 may be disposed between the anode current collector 21 and the first anode active material layer 22 before assembling the all-solid-state secondary battery 1. When the second anode active material layer 24 is disposed between the anode current collector 21 and the first anode active material layer 22 before assembling the all-solid-state secondary battery 1, the second anode active material layer 24 acts as a lithium reservoir because it is a metal layer including lithium. For example, lithium foil may be disposed between the anode current collector 21 and the first anode active material layer 22 before assembling the all-solid-state secondary battery 1.

When the second anode active material layer 24 is deposited by charging after assembling the all-solid-state secondary battery 1, the energy density of the all-solid-state secondary battery 1 increases because the second anode active material layer 24 is not included during the assembling of the all-solid-state secondary battery 1. When charging the all-solid-state secondary battery 1, the charging is performed in excess of the charge capacity of the first anode active material layer 22. That is, the first anode active material layer 22 is overcharged. During the initial stage of charging, lithium is absorbed into the first anode active material layer 22. The anode active material included in the first cathode active material layer 22 forms an alloy or compound with the lithium ions that have moved from the cathode layer 10. When charging exceeds the capacity of the first anode active material layer 22, for example, lithium is deposited on the back surface of the first anode active material layer 22, that is, between the anode current collector 21 and the first anode active material layer 22, and a metal layer corresponding to the second anode active material layer 24 is formed by the deposited lithium. The second anode active material layer 24 is a metal layer mainly including lithium (i.e., metal lithium). These results are obtained because the anode active material included in the first anode active material layer 22 includes a material that forms an alloy or compound with lithium. During discharging, lithium in the first anode active material layer 22 and the second anode active material layer 24, that is, the metal layer, is ionized and moves toward the cathode layer 10. Therefore, it is possible to use lithium as an anode active material in the all-solid-state secondary battery 1. In addition, since the first anode active material layer 22 covers the second anode active material layer 24, it acts as a protective layer for the second anode active material layer 24, that is, the metal layer, and at the same time, serves to suppress the deposition and growth of lithium dendrites. Therefore, the short circuit and capacity reduction of the all-solid-state secondary battery 1 are suppressed, and as a result, the cycle characteristics of the all-solid-state secondary battery 1 are improved. In addition, when the second anode active material layer 24 is disposed by charging after assembling the all-solid-state secondary battery 1, the anode layer 20, that is, the anode current collector 21 and the first anode active material layer 22, and the region therebetween, are Li-free regions that do not include lithium (Li) in the initial state of the all-solid-state secondary battery 1 or in the state after complete discharging.

### [Anode: anode current collector]

The anode current collector 21 is composed of, for example, a material that does not react with lithium, that is, does not form both an alloy and a compound. Examples of the material constituting the anode collector 21 include, but are not necessarily limited to, copper (Cu), stainless steel, titanium (Ti), iron (Fe), cobalt (Co), and nickel (Ni), and any material that can be used as an electrode collector in the relevant technical field may be used. The anode current collector 21 may be composed of one of the above-described metals, or may be composed of an alloy or coating material of two or more of the above-described metals. The anode collector 21 has, for example, a shape of a plate or a foil.

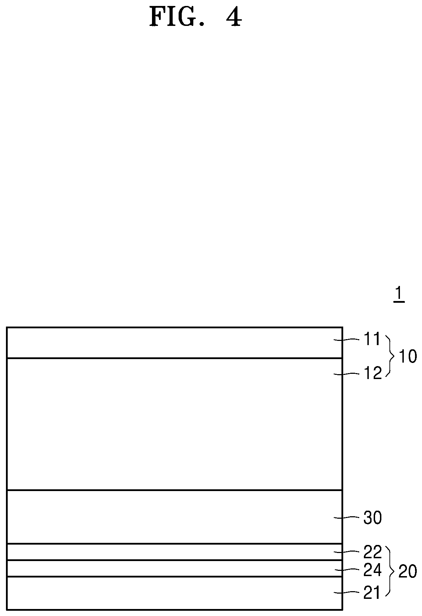

Referring to FIG. 4, the all-solid-state secondary battery 1 may further include, for example, a thin film 23 including an element capable of forming an alloy with lithium on one surface of the anode current collector 21. The thin film 23 is disposed between the anode current collector 21 and the first anode active material layer 22. The thin film 23 includes, for example, an element capable of forming an alloy with lithium. The element capable of forming an alloy with lithium may be, but is not necessarily limited to, gold, silver, zinc, tin, indium, silicon, aluminum, or bismuth, and any element capable of forming an alloy with lithium in the relevant technical field may be used. The thin film 23 may be composed of one of these metals or may composed of an alloy of several types of metals. Since the thin film 23 is disposed on one surface of the anode current collector 21, for example, the deposition shape of the second anode active material layer 24 deposited between the thin film 23 and the first anode active material layer 22 becomes flatter, and thus the cycle characteristics of the all-solid-state secondary battery 1 can be further improved.

The thickness of the thin film 23 is, for example, 1 nm to 800 nm, 10 nm to 700 nm, 50 nm to 600 nm, or 100 nm to 500 nm. When the thickness of the thin film 23 is less than 1 nm, it may be difficult for the thin film 23 to perform its function. When the thickness of the thin film 23 is too thick, the thin film 23 itself absorbs lithium, so that the deposition amount of lithium in the anode may be reduced, the energy density of the all-solid-state battery may be reduced, and the cycle characteristics of the all-solid-state secondary battery 1 may be deteriorated. The thin film 23 may be formed on the anode current collector 21 by, for example, a vacuum deposition method, a sputtering method, a plating method, or the like, but the disclosure is not necessarily limited to these methods, and any method capable of forming the thin film 23 in the relevant technical field is possible.

Although not shown in the drawings, the anode current collector 21 may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Since the base film includes an insulating thermoplastic polymer, when a short circuit occurs, the base film softens or liquefies, thereby blocking battery operation and suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. For more specific details on the base film, metal layer, metal chip, and lead tab of the anode current collector 21, refer to the above-described cathode current collector 11. Since the anode current collector 21 has this structure, the weight of the anode may be reduced, and as a result, the energy density of the anode and the lithium battery may be improved.

### [Electrolyte layer]

### [Electrolyte layer: electrolyte]

Referring to FIGS. 1 to 6, the solid electrolyte layer 30 includes a solid electrolyte disposed between the cathode 10 and the anode 20. The electrolyte layer may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte is, for example, a sulfide-based solid electrolyte. The sulfide-based solid electrolyte is, for example, at least one selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, and Ga), Li₂S-GeS₂, Li₂S-SiS₂-Li₃PO₄, Li₂S-SiS₂-LiₚMO_{q} (where p and q are positive numbers, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ, (0≤x≤2). The sulfide-based solid electrolyte is prepared by treating starting materials such as Li₂S and P₂S₅ using a melt quenching method or a mechanical milling method. After this treatment, heat treatment may be performed. The solid electrolyte may be amorphous, crystalline, or a mixed state thereof. In addition, the solid electrolyte may include, for example, sulfur (S), phosphorus (P), and lithium (Li) as at least constituent elements among the above-described sulfide-based solid electrolyte materials. For example, the solid electrolyte may be a material including Li₂S-P₂S₅. When using a sulfide-based solid electrolyte material including Li₂S-P₂S₅ for forming the solid electrolyte, the mixed molar ratio of Li₂S and P₂S₅ is, for example, in the range of Li₂S: P₂S₅ = 20:80 to 90:10, 25:75 to 90:10, 30:70 to 70:30, 40:60 to 60:40.

The sulfide-based solid electrolyte may include, for example, an argyrodite type solid electrolyte represented by Formula 1 below.

<Formula 1 > Li⁺₁₂₋ₙ₋ₓAⁿ⁺X²⁻₆₋ₓY⁻ₓ

In the Formula, A is P, As, Ge, Ga, Sb, Si, Sn, Al, In, Ti, V, Nb, or Ta, X is S, Se, or Te, Y is Cl, Br, I, F, CN, OCN, SCN, or N₃, and 1≤n≤5, 0≤x≤2. The sulfide-based solid electrolyte may be, for example, an argyrodite-type compound including at least one selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The sulfide-based solid electrolyte may be, for example, an argyrodite-type compound including at least one selected from Li₆PS₅Cl, Li₆PS₅Br, and Li₆PS₅I.

The density of the argyrodite-type solid electrolyte may be 1.5 to 2.0 g/cc. Since the argyrodite-type solid electrolyte has a density of 1.5 g/cc or more, the internal resistance of an all-solid-state secondary battery is reduced, and the penetration of the electrolyte layer by Li can be effectively suppressed.

The oxide-based solid electrolyte may be, for example, Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT)(0≤x<1, 0≤y<1), PB(Mg₃Nb_{2/3})O₃-PbTiO₃(PMN-PT), HfOz, SrTiO₃, SnOz, CeO₂, Na₂O, MgO, NiO, CaO, BaO, ZnO, ZrO₂, Y₂O₃, Al₂O₃, TiO₂, SiOz, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, 0≤x≤10), or a combination thereof. The oxide-based solid electrolyte is prepared, for example, by a sintering method or the like.

The oxide-based solid electrolyte is, for example, a garnet-type solid electrolyte selected from Li₇La₃Zr₂O₁₂ (LLZO) and Li₃₊ₓLa₃Zr₂₋ₐMₐO₁₂ (M doped LLZO, M=Ga, W, Nb, Ta, or Al, 0<a<2, 0≤x≤10).

The polymer solid electrolyte is an electrolyte that includes a mixture of a lithium salt and a polymer or includes a polymer having an ion-conducting functional group. The polymer solid electrolyte may be, for example, a polymer electrolyte that is in a solid state at 25°C and 1 atm. The polymer solid electrolyte may not include liquid. The polymer solid electrolyte includes a polymer, and the polymer may be, but is not limited to, for example, polyethylene oxide (PEO), polyvinylidene fluoride (PVDF), vinylidene fluoride-hexafluoropropylene (PVDF-HFP), polyethylene oxide (PEO), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), polymethyl methacrylate (PMMA), poly(methylmethacrylate), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (PAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylatlacene-2-sulfonate 9,10-diphenylanthracene-2-sulfonate (DPASLi+), or a combination thereof, and any material that is used as a plolymer electrolyte in the relevant technical field may be used. Any lithium salt that can be used as a lithium salt in the relevant technical field may be used. The lithium salt is, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each 1 to 20), LiCl, Lil, or a mixture thereof. The polymer included in the polymer solid electrolyte may be, for example, a compound including 10 or more, 20 or more, 50 or more, or 100 or more repeating units. The weight average molecular weight of the polymer included in the polymer solid electrolyte may be, for example, 1000 Dalton or more, 10,000 Dalton or more, 100,000 Dalton or more, or 1,000,000 Dalton or more.

The gel electrolyte is, for example, a gel polymer electrolyte. The gel electrolyte may have a gel state without including a polymer.

The gel polymer electrolyte may include a liquid electrolyte and a polymer or may include an organic solvent and a polymer having an ion-conducting functional group. The polymer gel electrolyte may be, for example, a polymer electrolyte that is in a gel state at 25°C and 1 atm. The polymer gel electrolyte may have a gel state without including liquid. The liquid electrolyte used in the polymer gel electrolyte may be, for example, an ionic liquid, a mixture of a lithium salt and an organic solvent, a mixture of an ionic liquid and an organic solvent, or a mixture of a lithium salt, an ionic liquid, and an organic solvent. The polymer used in the polymer gel electrolyte may be selected from the polymers used in the solid polymer electrolyte. The organic solvent may be selected from the organic solvents used in the liquid electrolyte. The lithium salt may be selected from the lithium salts used in the solid polymer electrolyte. The ionic liquid is a salt that is liquid at room temperature or molten at room temperature and is composed only of ions and has a melting point of room temperature or lower. The ionic liquid may include at least one selected from compounds including, for example, a) at least one cation selected from ammonium, pyrrolidinium, pyridinium, pyrimidinium, imidazolium, piperidinium, pyrazolium, oxazolium, pyridazinium, phosphonium, sulfonium, triazolium, and mixtures thereof, and b) at least one anion selected from BF₄-, PF₆-, AsF₆-, SbF₆-, AlCl₄-, HSO₄-, ClO₄-, CH₃SO₃-, CF3CO2-, Cl-, Br-, I-, BF₄-, SO₄-, CF₃SO₃-, (FSO₂)₂N-, (C₂F₅SO₂)₂N-, (C₂F₅SO₂)(CF₃SO₂)N-, and (CF₃SO₂)₂N-. The polymer solid electrolyte may be impregnated into an electrolyte solution in a lithium battery to form a gel polymer electrolyte. The polymer gel electrolyte may further include inorganic particles. The polymer included in the polymer gel electrolyte may be, for example, a compound including 10 or more, 20 or more, 50 or more, or 100 or more repeating units. The weight average molecular weight of the polymer included in the polymer gel electrolyte may be, for example, 500 Dalton or more, 1000 Dalton or more, 10,000 Dalton or more, 100,000 Dalton or more, or 1,000,000 Dalton or more.

### [Electrolyte layer: binder]

The electrolyte layer 30 may include, for example, a binder. The binder included in the electrolyte layer 30 may be, but is not limited to, styrene butadiene rubber (SBR), polytetrafluoroethylene, polyvinylidene fluoride, or polyethylene, and any binder used in the relevant technical field may be used. The binder of the electrolyte layer 30 may be the same as or different from the binder included in the cathode active material layer 12 and the anode active material layer 22. The binder may be omitted.

The content of the binder included in the electrolyte layer 30 is 0.1 to 10 wt%, 0.1 to 5 wt%, 0.1 to 3 wt%, 0.1 to 1 wt%, 0 to 0.5 wt%, or 0 to 0.1 wt% with respect to the total weight of the solid electrolyte layer 30.

Referring to FIG. 7, the anode layer 20 includes an anode current collector 21 and a lithium host layer 22 disposed on one surface of the anode current collector 21. A first inactive member 41 is disposed on one side surface of the cathode layer 10. A second inactive member 42 is disposed on one side surface of the anode layer 20.

The second inactive member 42 is disposed on one side surface of the lithium host layer 22 and is disposed between a solid electrolyte layer 40 and an anode current collector 21 facing the solid electrolyte layer 40. The second inactive member 42 is not disposed on one side surface of the anode current collector 21. Referring to FIG. 7, the second inactive member 42 is disposed on one side surface of the lithium host layer 22 and one side surface of the anode current collector 21. Since the all-solid-state secondary battery 1 includes the second inactive member 42, a short circuit between the lithium metal deposited on the lithium host layer 22 and the cathode layer 10 during charging and discharging of the all-solid-state secondary battery 1 is more effectively prevented, resulting in improved cycle characteristics of the all-solid-state secondary battery 2. Since the all-solid-state secondary battery 1 includes the second inactive member 42, cracks of the solid electrolyte layer 30 during manufacturing and/or charging and discharging of the all-solid-state secondary battery 1 is prevented, resulting in improved cycle characteristics of the all-solid-state secondary battery 1. In the all-solid-state secondary battery 1 that does not include the second inactive member 42, when manufacturing and/or charging and discharging the all-solid-state secondary battery 1, uneven pressure is applied to the solid electrolyte layer 30 in contact with the anode layer 20, causing cracks to form in the solid electrolyte layer 30, and the possibility of a short circuit occurring due to the growth of lithium metal through these cracks.

Referring to FIGS. 3 to 7, in the all-solid-state secondary battery 1, the thickness (T2) of the second inactive member 42 is substantially equal to the thickness (T1) of the lithium host layer 22. Since the sum of the thickness (T2) of the second inactive member 42 and the thickness (T4) of the anode current collector 21 is substantially equal to the thickness (T3) of the anode layer 20, a uniform pressure is applied between the anode layer 20 and the solid electrolyte layer 30, and the anode layer 20 and the solid electrolyte layer 30 are sufficiently adhered to each other, thereby reducing the interfacial resistance between the anode layer 20 and the solid electrolyte layer 30. In addition, since the solid electrolyte layer 30 is sufficiently sintered during the pressurized manufacturing process of the all-solid-state secondary battery 1, the internal resistance of the solid electrolyte layer 30 and the all-solid-state secondary battery 1 including the same is reduced.

A method of manufacturing a solid secondary battery according to an embodiment will be described as follows.

An all-solid-state secondary battery according to an embodiment may be manufactured by a method including the processes: first milling M₂S and an alkali metal salt;
adding an inorganic electronic conductive structure and a metal conductive material to the first milled product and performing second milling to obtain a composite; preparing a cathode using a composition in which a binder is added to or mixed with the composite; preparing an anode; and placing an electrolyte between the cathode and the anode.

During the first milling and second milling, the materials are crushed and energy is applied. The second milling time is adjusted to be smaller than the first milling time to control the size of the inorganic electronic conductive structure and the metal conductive material.

In the process of obtaining the composite, a carbon-based material may be further added to the composition.

The mixing weight ratio of the inorganic electronic conductive structure and the metal conductive material is 1:1 to 10:1, 3:1 to 10:1, or 5:1 to 9:1. When the weight ratio of the inorganic electronically conductive structure and the metal conductive agent is within the above range, high-rate characteristics, lifespan characteristics, and electrode density can be improved due to the improvement of an electronic conductivity network within an electrode.

A solid electrolyte may be added to the composition.

The solid electrolyte is a sulfide-based solid electrolyte. The size of the sulfide-based solid electrolyte is 0.1 nm to 10 µm, for example, 100 nm to 3 µm.

The sulfide-based solid electrolyte is at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-Lil, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number, and Z is one of Ge, Zn, and Ga), Li₂S-GeS₂, Li₂S-SiS₂-Li₃PO₄, Li₂S-SiS₂-LiₚMO_{q} (p and q are each a positive number, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2), the sulfide-based solid electrolyte includes an argyrodite-type solid electrolyte, the argyrodite-type solid electrolyte includes at least one selected from Li₆PS₅Cl, Li₆PS₅Br, and Li₆PS₅I, and
the argyrodite-type solid electrolyte has a density of 1.5 to 2.0 g/cc.

In the process of obtaining the composite, a carbon-based material may be further added to the composition. As the carbon-based material, carbon nanofibers or the like are used.

Hereinafter, the present inventive concept will be described in more detail through examples and comparative examples. However, these examples are intended to illustrate the present inventive concept, and the scope of the present inventive concept is not limited to these examples.

In the following examples, SE represents a solid electrolyte used in the preparation of the cathode to be described later and its content, and % represents weight %.

### (Preparation of composite cathode active material)

### Example 1: 30% Li₂S-20% Lil-(0.75% SUS wire + 6.75% MoS₂)+ 42.5% SE, 2 steps

### (First step)

Li₂S and Lil were mixed at a weight ratio of 30:20. The mixture was mechanically milled using a ball mill to prepare a Li₂S-LiI composite. Milling conditions were 25 °C, 600 rpm for 10 hours.

### (Second step)

The Li₂S-LiI composite, plate-shaped MoS₂ (Sigma Aldrich), and SUS wire were mixed at a weight ratio of 50:6.75:0.75. The SUS wire has a length (X-direction) of 4 µm, a diameter of 100 nm (0.1 µm), and a length/diameter ratio of 40. Further, the MoS₂ has a plate shape, and the plate-shaped MoS₂ has a length (X direction) of about 30 µm, a thickness (Z direction) of 5 µm, and a width (Y direction) of about 15 µm. The mixture was mechanically milled using a ball mill to prepare a Li₂S-Lil-MoS₂ composite. Milling conditions were 25 °C, 600 rpm for 5 hours. A Li₂S-Lil-MoS₂-SuS wire composite was used as a composite cathode active material. Here, 42.5% SE represents the content of a solid electrolyte in the preparation of a cathode mixture to be described later. The same applies to the following examples and comparative examples.

### Example 2: 30% Li₂S-20% Lil-(0.75% Ti wire + 6.75% MoS₂ )+ 42.5% SE, 2 steps

A composite cathode active material was prepared in the same manner as in Example 1, except that a Ti wire was used instead of a SUS wire.

### Example 3: 30% Li₂S-20% Lil-(3.75% SUS wire + 3.75% MoS₂) + 42.5% SE, 2 steps

A composite cathode active material was prepared in the same manner as in Example 1, except that in the second step, the weight ratio of Lii₂S-LiI composite, plate-shaped MoS₂ (Sigma Aldrich), and SUS wire was changed from 50:6.75:0.75 to 50:3.75:3.75.

### Example 4: 30% Li₂S-20% Lil-(3.75% Ti wire + 3.75% MoS₂) + 42.5% SE, 2 steps

A composite cathode active material was prepared in the same manner as in Example 2, except that in the second step, the weight ratio of Li₂S-LiI composite, plate-shaped MoS₂ (Sigma Aldrich), and Tu wire was changed from 50:6.75:0.75 to 50:3.75:3.75.

### Example 5: 30% Li₂S-20% Lil-(0.75% SUS wire + 6.75% VO₂) + 42.5% SE, 2 steps

A Li₂S-LiI-SUS wire+VO₂ fiber composite was prepared in the same manner as in Example 1, except that fiber-shaped VO₂ was used instead of plate-shaped WS₂.

### Comparative Example 1: 30% Li₂S-20% Lil-7.5% CNF + 42.5% SE (Li2S-Lil-CNF, 510 rpm, 10 hr, 2 steps, 20G

### (First step)

Li₂S and Lil were mixed at a weight ratio of 30:20 to prepare a first mixture. The first mixture was mechanically milled using a ball mill to prepare a Li₂S-LiI composite.

Milling conditions were 25 °C, 510 rpm for 10 hours. The milling energy applied to a sample during milling was 20 G.

### (Second step)

The Li₂S-LiI composite and nanofibers (CNF) were mixed at a weight ratio of 50:10 to prepare a second mixture. The second mixture was mechanically milled using a ball mill to prepare a Li₂S-LiI-CNF composite.

Milling conditions were 25 °C, 510 rpm for 10 hours. The milling energy applied to the sample during milling was 20 G. The Li₂S-LiI-CNF composite was used as a composite cathode active material.

### Comparative Example 2: 30% Li₂S-20% Lil-7.5% MoS₂ + 42.5% SE

A composite cathode active material was prepared in the same manner as in Example 1, except that in the second step, the Li₂S-LiI composite and MoS2 were mixed at a weight ratio of 50:7.5 instead of the Li₂S-LiI composite, plate-shaped MoS₂ (Sigma Aldrich), and SUS wire being mixed at a weight ratio of 50:6.75:0.75.

### Comparative Example 3: 30% Li₂S- 20% Lil-(0.75% CNF + 6.75% MoS₂)+ 42.5% SE, 2 steps

A composite cathode active material was prepared in the same manner as in Example 1, except that CNF was used instead of SUS wire.

### Comparative Example 4: 30% Li₂S + 20% Lil + 0.75% SUS wire + 6.75% MoS₂ simple blend, 1 step

Li₂S, Lil, SUS wire, and MoS₂ were mixed at a weight ratio of 30:20:0.75:6.75. The above mixture was directly used as a cathode active material.

### Comparative Example 5: (Li₂S-MoS₂)-(LiI+SUS wire composite)+ 42.5% SE)

### (First step)

Li₂S and MoS₂ were mixed at a weight ratio of 30:7.5. The mixture was mechanically milled using a ball mill to prepare a Li₂S-MoS₂ composite. Milling conditions were 25 °C, 600 rpm for 5 hours.

### (Second step)

The Li₂S-MoS₂ composite was mixed with Lil and SUS wire at a weight ratio of 36.75:20:6.75. The mixture was mechanically milled using a ball mill to prepare a Li₂S-MoS₂-LiI+SUS wire composite. Milling conditions were 25 °C, 600 rpm for 10 hours. The Li₂S-MoS₂-LiI+SUS wire composite was used as a composite cathode active material.

### Comparative Example 6: 30% Li₂S-20% Lil + (SUS wire 0.75% + 7.5% MoS₂) simple blend, 2 steps

Li₂S and Lil were mixed at a weight ratio of 30:20. The mixture was mechanically milled using a ball mill to prepare a Li₂S--LiI composite. Milling conditions were 25 °C, 600 rpm for 10 hours.

The Li₂S-LiI composite, SUS wire, and MoS₂ were mixed at a weight ratio of 50:0.75:6.75. The above mixture was directly used as a cathode active material.

### Comparative Example 6A

The process was carried out in the same manner as in Example 1, except that in the second step, a structure having a length (in the X direction) of 4 µm, a diameter of 4 µm, and a length/diameter ratio of 1 was used instead of the SUS wire, in the Li₂S-LiI composite, plate-shaped MoS₂ (Sigma Aldrich), and SUS wire.

### Comparative Example 6B

The process was carried out in the same manner as in Example 1, except that SiO₂ was used instead of plate-shaped MoS₂ in the Li₂S-LiI composite, plate-shaped MoS₂ (Sigma Aldrich), and SUS wire.

### (Manufacturing of cathode and solid secondary battery)

### Example 6

### (Manufacturing of cathode)

The composite prepared in Example 1 was prepared as a cathode active material. Li₆PS₅Cl, an argyrodite-type crystal (D50=3.0 µm, crystalline), was prepared as a solid electrolyte. PTFE was prepared as a binder. These materials were physically mixed in a mortar at a weight ratio of composite cathode active material: solid electrolyte: binder = 57.5: 42.5: 1.2 to prepare a cathode mixture. The cathode mixture was obtained by dry mixing using a ball mill.

The cathode mixture was disposed on one surface of a cathode current collector made of carbon-coated aluminum foil on one surface thereof, and plate pressing was performed by a pressure of 200 MPa for 10 minutes to manufacture a cathode. The thickness of the cathode was about 120 µm. The thickness of the cathode active material layer was about 100 µm, and the thickness of the carbon-coated aluminum foil was about 20 µm. The area of the cathode active material layer was equal to the area of the cathode current collector.

### (Manufacturing of anode)

A SUS foil having a thickness of 10 µm was prepared as an anode current collector. Carbon black (CB) having a primary particle diameter of about 30 nm and silver (Ag) particles having an average particle diameter of about 60 nm were prepared as an anode active material.

4 g of a mixed powder containing CB and Ag particles at a weight ratio of 3:1 was put into a container, and 4 g of an NMP solution containing 7 wt% of PVDF binder (#9300 from Kureha Co., Ltd.) was added thereto to prepare a mixed solution. A slurry was prepared by adding NMP dropwise to the prepared mixed solution and stirring the mixed solution. The prepared slurry was applied onto a SUS sheet using a bar coater, dried in air at 80 °C for 10 minutes, and then vacuum-dried at 40 °C for 10 hours to prepare a laminate. The prepared laminate was cold-roll-pressed to flatten the surface thereof to prepare an anode having a first anode active material layer/anode current collector structure. The thickness of the first anode active material layer was about 15 µm. The area of the first anode active material layer was equal to the area of the anode current collector.

### (Manufacturing of solid electrolyte layer)

1.5 parts by weight of an acrylic binder was added to 98.5 parts by weight of a solid electrolyte, Li₆PS₅Cl, which is an argyrodite-type crystal (D₅₀=3.0 µm, crystalline), to prepare a mixture. A slurry was prepared by adding octyl acetate to the prepared mixture and stirring the mixture. The prepared slurry was applied using a bar coater onto a 15 µm thick nonwoven fabric placed on a 75 µm thick PET substrate, and dried in air at 80 °C for 10 minutes to prepare a laminate. The prepared laminate was vacuum-dried at 80 °C for 2 hours to manufacture a solid electrolyte layer.

### (Inactive member)

A flame-retardant inactive member was manufactured by forming a slurry containing pulp fiber (cellulose fiber), glass fiber, aluminum hydroxide (Al(OH)₃), an acrylic binder, and a solvent into a gasket shape and then removing the solvent.

The weight ratio of pulp fiber (cellulose fiber), glass fiber, aluminum hydroxide (Al(OH)₃), and acrylic binder was 20:8:70:2. The thickness of the inactive member was 120 µm.

Before placing the manufactured flame-retardant inactive member on a solid electrolyte layer, moisture, or the like was removed from the flame-retardant inactive member by vacuum heat treatment at 80 °C for 5 hours.

### (Manufacturing of all-solid-state secondary battery)

Referring to FIG. 6, a solid electrolyte layer was disposed on an anode so that a first anode active material layer was in contact with the solid electrolyte layer, and a cathode was disposed on the solid electrolyte layer. A gasket surrounding the cathode and in contact with the solid electrolyte layer was disposed around the cathode to prepare a laminate. The thickness of the gasket was about 120 µm. The above-described flame retardant inactive member was used as the gasket. The gasket is disposed so as to be in contact with the side surface of the cathode and the solid electrolyte layer. The cathode is disposed at the center of the solid electrolyte layer, and the gasket surrounds the cathode and extends to the end of the solid electrolyte layer. The area of the cathode was about 90% of the area of the solid electrolyte layer, and the gasket was disposed over the entire remaining 10% area of the solid electrolyte layer where the cathode was not disposed.

The prepared laminate was plate-pressed by a pressure of 500 MPa at 85 °C for 30 min. By this pressing treatment, the solid electrolyte layer is sintered, thereby improving battery characteristics. The thickness of the sintered solid electrolyte layer was about 45 µm. The density of the Li₆PS₅Cl solid electrolyte, which is an argyrodite-type crystal, included in the sintered solid electrolyte layer, was 1.6 g/cc. The area of the solid electrolyte layer was equal to the area of the anode.

The pressed laminate was disposed in a pouch and sealed in vacuum to manufacture an all-solid-state secondary battery. A portion of the cathode current collector and a portion of the anode current collector were extended outside the sealed battery, and were used as a cathode terminal and an anode terminal.

### Examples 7 to 10

Cathode and all-solid-state secondary batteries were manufactured in the same manner as in Example 6, except that the composite cathode active materials prepared in Examples 2 to 5 were each used.

### Comparative Examples 7 to 12

Cathode and all-solid-state secondary batteries were manufactured in the same manner as in Example 6, except that the composite cathode active materials prepared in Comparative Examples 1 to 6 were each used.

### Comparative Examples 12A and 12B

Cathode and all-solid-state secondary batteries were manufactured in the same manner as in Example 6, except that the composite cathode active materials prepared in Comparative Examples 6A and 6B were each used.

### Example 11: Sulfide-based cathode active material (Li₂S-C composite), first anode active material layer (Ag-supported carbon), and first and second flame-retardant inactive members used

### (Manufacturing of anode layer)

A SUS foil having a thickness of 10 µm was prepared as an anode current collector. Further, carbon black (CB) having a primary particle diameter of about 30 nm and silver (Ag) particles having an average particle diameter of about 60 nm were prepared as an anode active material.

4 g of a mixed powder containing CB and Ag particles at a weight ratio of 3:1 was put into a container, and 4 g of an NMP solution containing 7 wt% of PVDF binder (#9300 from Kureha Co., Ltd.) was added thereto to prepare a mixed solution. Subsequently, a slurry was prepared by adding NMP dropwise to this mixed solution and stirring the mixed solution. The prepared slurry was applied onto a SUS sheet using a bar coater, dried in air at 80 °C for 10 minutes The laminate obtained in this way was vacuum-dried at 40 °C for 10 hours. The dried laminate was cold-roll-pressed at a speed of 5 m/sec with a pressure of 5 ton·f/cm² to flatten the surface of the first cathode active material layer of the laminate. An anode layer was manufactured by the above processes. The thickness of the first anode active material layer included in the anode layer was about 15 µm. The area of the first anode active material layer was equal to the area of the anode current collector.

### (Manufacturing of cathode layer)

The composite cathode active material prepared in Example 1 was prepared as a cathode active material.

Li₆PS₅Cl, an argyrodite-type crystal (D50=3.0 µm, crystalline), was prepared as a solid electrolyte. Ketjen black was prepared as a conductive material. These materials were mixed at a weight ratio of cathode active material: solid electrolyte: conductive material = 40: 50: 10 to prepare a cathode mixture. The cathode mixture was obtained by dry mixing using a ball mill. The cathode mixture obtained by ball milling formed an ionic conductive and electronic conductive network.

The cathode mixture was disposed on one surface of a cathode current collector made of carbon-coated aluminum foil or SUS on one surface thereof, and plate pressing was performed by a pressure of 200 MPa for 10 minutes to manufacture a cathode layer. The thickness of the cathode layer was about 120 µm. The thickness of the cathode active material layer was about 100 µm, and the thickness of the carbon-coated aluminum foil was about 20 µm.

### (Manufacturing of solid electrolyte layer)

1.5 parts by weight of an acrylic binder was added to 98.5 parts by weight of a solid electrolyte, Li₆PS₅Cl, which is an argyrodite-type crystal (D₅₀=3.0 µm, crystalline), to prepare a mixture. A slurry was prepared by adding octyl acetate to the prepared mixture and stirring the mixture. The prepared slurry was applied using a bar coater onto a 15 µm thick nonwoven fabric placed on a 75 µm thick PET substrate, and dried in air at 80 °C for 10 minutes to obtain a laminate. The obtained laminate was vacuum-dried at 80 °C for 2 hours. A solid electrolyte layer was prepared by the above processes.

### (Flame-retardant inactive member)

A flame-retardant inactive member was manufactured by forming a slurry containing pulp fiber (cellulose fiber), glass fiber, aluminum hydroxide (Al(OH)₃), titanium dioxide (TiO₂), an acrylic binder, and a solvent into a gasket shape and then removing the solvent.

The weight ratio of pulp fiber (cellulose fiber), glass fiber, aluminum hydroxide (Al(OH)₃), titanium dioxide (TiO₂), and acrylic binder was 20:8:60:10:2. The thickness of the inactive member was 120 µm.

Before placing the manufactured flame-retardant inactive member on a solid electrolyte layer, moisture, or the like was removed from the flame-retardant inactive member by vacuum heat treatment at 80 °C for 5 hours.

### (Manufacturing of all-solid-state secondary battery)

Referring to FIG. 6, a solid electrolyte layer was disposed on an anode layer so that a first anode active material layer was in contact with the solid electrolyte layer, and a cathode layer was disposed on the solid electrolyte layer. A first gasket surrounding the anode layer and in contact with the solid electrolyte layer was disposed around the anode layer to prepare a laminate. The thickness of the first gasket was about 120 µm. The above flame-retardant inactive member (first inactive member) was used as the first gasket. The anode layer is disposed at the center of the solid electrolyte layer, and the first gasket surrounds the anode layer and extends to the end of the solid electrolyte layer. The area of the anode layer was about 90% of the area of the solid electrolyte layer, and the first gasket was disposed over the entire remaining 10% area of the solid electrolyte layer where the anode layer was not disposed.

A second gasket surrounding the cathode layer and in contact with the solid electrolyte layer was disposed around the cathode layer to prepare a laminate. The thickness of the second gasket was about 120 µm. The above flame-retardant inactive member (second inactive member) was used as the second gasket. The cathode layer is disposed at the center of the solid electrolyte layer, and the second gasket surrounds the cathode layer and extends to the end of the solid electrolyte layer. The area of the cathode layer was about 80% of the area of the solid electrolyte layer, and the second gasket was disposed over the entire remaining 20% area of the solid electrolyte layer where the cathode layer was not disposed.

The prepared laminate was plate-pressed by a pressure of 500 MPa at 85 °C for 30 min. By this pressing treatment, the solid electrolyte layer is sintered, thereby improving battery characteristics. The thickness of the sintered solid electrolyte layer was about 45 µm.

The pressed laminate was disposed in a pouch and sealed in vacuum to manufacture an all-solid-state secondary battery. A portion of the cathode current collector and a portion of the anode current collector were extended outside the sealed battery, and were used as a cathode layer terminal and an anode layer terminal.

### Example 12: Mono-cell all-solid-state secondary battery, sulfide-based cathode active material (Li₂S-C-solid electrolyte composite), lithium host layer used, first and second flame-retardant inactive members used

### (Manufacturing of anode layer)

A SUS foil having a thickness of 10 µm was prepared as an anode current collector. Further, a carbonized cotton sheet was prepared as a lithium host. The carbonized cotton sheet was prepared according to the method disclosed in Joule 2017, 1, 563.

The prepared carbonized cotton sheet was placed on a SUS foil to prepare a laminate. The prepared laminate was vacuum-dried at 40°C for 10 hours. The dried laminate was cold-roll-pressed at a speed of 5 m/sec with a pressure of 5 ton·f/cm² to flatten the surface of the first cathode active material layer of the laminate. An anode layer was manufactured by the above processes. The thickness of the carbonized cotton sheet included in the cathode layer, that is, the lithium host layer, was about 120 µm.

### (Manufacturing of cathode layer)

The composite cathode active material of Example 1 was prepared as a cathode active material.

Li₆PS₅Cl, an argyrodite-type crystal (D50=3.0 µm, crystalline), was prepared as a solid electrolyte. Ketjen black was prepared as a conductive material. These materials were mixed at a weight ratio of cathode active material: solid electrolyte: conductive material = 40: 50: 10 to prepare a cathode mixture. The cathode mixture was obtained by dry mixing using a ball mill. The cathode mixture obtained by ball milling formed an ionic conductive and electronic conductive network.

The cathode mixture was disposed on one surface of a cathode current collector made of carbon-coated aluminum foil or SUS on one surface thereof, and plate pressing was performed by a pressure of 200 MPa for 10 minutes to manufacture a cathode layer. The thickness of the cathode layer was about 120 µm. The thickness of the cathode active material layer was about 100 µm, and the thickness of the carbon-coated aluminum foil was about 20 µm.

### (Manufacturing of solid electrolyte layer)

1.5 parts by weight of an acrylic binder was added to 98.5 parts by weight of a solid electrolyte, Li₆PS₅Cl, which is an argyrodite-type crystal (D₅₀=3.0 µm, crystalline), to prepare a mixture. A slurry was prepared by adding octyl acetate to the prepared mixture and stirring the mixture. The prepared slurry was applied using a bar coater onto a 15 µm thick nonwoven fabric placed on a 75 µm thick PET substrate, and dried in air at 80 °C for 10 minutes to obtain a laminate. The obtained laminate was vacuum-dried at 80 °C for 2 hours. A solid electrolyte layer was prepared by the above processes.

### (Flame-retardant inactive member)

A flame-retardant inactive member was manufactured by forming a slurry containing pulp fiber (cellulose fiber), glass fiber, aluminum hydroxide (Al(OH)₃), titanium dioxide (TiO₂), an acrylic binder, and a solvent into a gasket shape and then removing the solvent.

The weight ratio of pulp fiber (cellulose fiber), glass fiber, aluminum hydroxide (Al(OH)₃), titanium dioxide (TiO₂), and acrylic binder was 20:8:60:10:2. The thickness of the inactive member was 120 µm.

Before placing the manufactured flame-retardant inactive member on a solid electrolyte layer, moisture, or the like was removed from the flame-retardant inactive member by vacuum heat treatment at 80 °C for 5 hours.

### (Manufacturing of all-solid-state secondary battery)

Referring to FIG. 7, a solid electrolyte layer was disposed on an anode layer so that a lithium host layer was in contact with the solid electrolyte layer, and a cathode layer was disposed on the solid electrolyte layer. A first gasket surrounding the anode layer and in contact with the solid electrolyte layer was disposed around the anode layer to prepare a laminate. The thickness of the first gasket was about 120 µm. The above flame-retardant inactive member (first flame-retardant inactive member) was used as the first gasket. The anode layer is disposed at the center of the solid electrolyte layer, and the first gasket surrounds the anode layer and extends to the end of the solid electrolyte layer. The area of the anode layer was about 90% of the area of the solid electrolyte layer, and the first gasket was disposed over the entire remaining 10% area of the solid electrolyte layer where the anode layer was not disposed.

A second gasket surrounding the cathode layer and in contact with the solid electrolyte layer was disposed around the cathode layer to prepare a laminate. The thickness of the second gasket was about 120 µm. The above flame-retardant inactive member (second flame-retardant inactive member) was used as the second gasket. The cathode layer is disposed at the center of the solid electrolyte layer, and the second gasket surrounds the cathode layer and extends to the end of the solid electrolyte layer. The area of the cathode layer was about 90% of the area of the solid electrolyte layer, and the second gasket was disposed over the entire remaining 10% area of the solid electrolyte layer where the cathode layer was not disposed.

The prepared laminate was plate-pressed by a pressure of 500 MPa at 85 °C for 30 min. By this pressing treatment, the solid electrolyte layer is sintered, thereby improving battery characteristics. The thickness of the sintered solid electrolyte layer was about 45 µm. The density of the Li₆PS₅Cl solid electrolyte, an argyrodite-type crystal included in the sintered solid electrolyte layer, was 1.6 g/cc.

The pressed laminate was disposed in a pouch and sealed in vacuum to manufacture an all-solid-state secondary battery. A portion of the cathode current collector and a portion of the anode current collector were extended outside the sealed battery, and were used as a cathode layer terminal and an anode layer terminal.

### Comparative Example 13: Sulfide-based cathode active material (Li₂S-C-solid electrolyte composite), lithium host layer not used (free), first and second flame-retardant inactive members not used (free)

A solid-state secondary battery was manufactured in the same manner as in Example 11, except that a second flame-retardant inert member (second gasket) was not used in the cathode layer, only an anode current collector was used in the anode layer, and a lithium host layer and a first flame-retardant inactive member (first gasket) were not used.

### Comparative Example 14: Sulfide-based cathode active material (Li₂S-C-solid electrolyte composite), lithium host layer not used (free), first flame-retardant inactive member not used (free)

A solid-state secondary battery was manufactured in the same manner as in Example 12, except that a second flame-retardant inactive member (second gasket) was used in the cathode layer, only an anode current collector was used in the anode layer, and a lithium host layer and a first flame-retardant inactive member (first gasket) were not used.

### Evaluation Example 1: XRD analysis and scanning electron microscopy analysis

For the composite cathode active materials (i.e. composites) prepared in Examples and Comparative Examples, XRD spectra were measured using Cu Kα radiation. The Li₂S crystallite sizes for a (111) crystal plane calculated from the first peak appearing at a diffraction angle of 2θ = 27° ± 2.0° for the (111) crystal plane in the measured XRD spectra are shown in Table 2 below. The sizes of the crystallites were calculated using the Sherrer Equation.

For the composite cathode active materials prepared in Example 1 and Comparative Examples 2 to 5, the Li₂S particle sizes (D50 particle sizes) of the composite cathode active materials were measured using a laser particle size analyzer (PSA) and a scanning electron microscope. The Li₂S particle size of the composite cathode active material is an arithmetic mean value of the particle sizes of a plurality of Li₂S particles measured using software from scanning electron microscope images. The measurement results are shown in Table 1 below.

**[Table 1]**

| Class. | First milling | Second milling | Solid solution formation | Li₂S crystallite size [nm] | Li₂S paticle size [µm] |
|---|---|---|---|---|---|
| Example 1 | 600 rpm, 28 G, 10 hr | 600 rpm, 28 G, 5 hr | ○ | 9.6 | less than 1 |
| 30%Li₂S-20%LiI-(0.75% SUS wire + 6.75 % MoS₂) + 42.5% SE | | | | | |
| Example 2 | 600 rpm, 28 G, 10 hr | 600 rpm, 28 G, 5 hr | ○ | 9.8 | less than 1 |
| 30%Li₂S-20%LiI-(0.75% Tiwire + 6.75% MoS₂) + 42.5% SE | | | | | |
| Example 3 | 600 rpm, 28 G, 10 hr | 600 rpm, 28 G, 5 hr | ○ | 9.8 | less than 1 |
| 30%Li₂S-20%LiI-(3.75% SUS wire + 3.75% MoS₂) + 42.5% SE | | | | | |
| Example 4 | 600 rpm, 28 G, 10 hr | 600 rpm, 28 G, 5 hr | ○ | 10.0 | less than 1 |
| 30%Li₂S-20%LiI-(3.75% Ti wire + 3.75% MoS₂) + 42.5% SE, 2 steps | | | | | |
| Example 5 | 600 rpm, 28 G, 10 hr | 600 rpm, 28 G, 5 hr | ○ | 9.8 | less than 1 |
| 30%Li₂S-20%LiI-(0.75% SUS wire + 6.75 % VO₂) + 42.5% SE | | | | | |
| Comparative Example 1 | 600 rpm, 28 G, 10 hr | 600 rpm, 28 G, 10 hr | ○ | 9.8 | less than 1 |
| 30%Li2S-20%Lil-7.5%CNF + 42.5% SE tatsumisago | | | | | |
| Comparative Example 2 | 600 rpm, 28 G, 10 hr | 600 rpm, 28 G, 5 hr | ○ | 10.1 | less than 1 |
| 30%Li₂S-20%LiI-7.5% MoS₂ + 42.5% SE | | | | | |
| Comparative Example 3 | 600 rpm, 28 G, 10 hr | 600 rpm, 28 G,5 hr | ○ | 10.2 | less than 1 |
| 30%Li₂S-20%LiI-(0.75% CNF + 6.75 % MoS₂) + 42.5% SE | | | | | |
| Comparative Example 4 | - | - | X | 67 | 8 |
| 30% Li₂S + 20% Lil + 0.75% SUS wire + 6.75% MoS₂ simple blend, 1 step | | | | | |
| Comparative Example 5 | 600 rpm, 28 G, 10 hr | 600 rpm, 28 G, 5 hr | X | 10.4 | less than 1 |
| (Li₂S-MoS₂)-(LiI+SUS wire composite) | | | | | |
| Comparative Example 6 | 600 rpm, 28 G, 10 hr | - | ○ | 30 | 4 |
| 30% Li₂S-20% Lil + (SUS wire 0.75% + 7.5% MoS₂) simple blend, 2 steps | | | | | |

As shown in Table 1, the (Li₂S-LiI-SUS wire + MoS₂) composite of Example 1 includes a Li₂S-LiI solid solution, the size of the Li₂S crystallites is 9.6 nm, and the Li₂S particle size of the composite is 1 µm or less. In this composite, simultaneous improvement of electrical conductivity and ionic conductivity through ball milling decreases the relative content of the solid electrolyte and increases the relative content of Li₂S, thereby improving electrode energy density. In contrast, as shown in Table 1, the simple mixture of Li₂S, Lil, SUS wire, and MoS₂ of Comparative Example 4 did not form a solid solution.

In addition, the composite of Comparative Example 4 was prepared by milling, so a Li₂S-LiI solid solution and a Li₂S-LiI-MoS₂ composite containing the same were not properly formed.

In the Li₂S-MoS₂-LiI+ SUS wire composite of Comparative Example 5, a Li₂S-MoS₂-LiI composite was prepared in the first step, and then this composite was prepared in the second step, so a Li₂S-LiI solid solution was not properly formed

According to Comparative Example 6, a Li₂S-LiI solid solution was formed, and then SUS wire and MoS₂ were simply blended, so the composite of Example 1 was not properly formed.

### Evaluation Example 2: Charge-discharge test

The charge-discharge characteristics of the all-solid-state secondary batteries of Examples 6 to 10 and Comparative Examples 7 to 12, Comparative Example 12A, and Comparative Example 12B, employing the composite cathode active materials prepared in Examples 1 to 5, Comparative Examples 1 to 6, Comparative Example 6A, and Comparative Example 6B, were evaluated by the following charge-discharge test.

A charge-discharge test was performed by putting an all-solid-state secondary battery into a constant temperature chamber at 45°C.

In the first cycle, the all-solid-state secondary battery was charged at a constant current of 0.1 C for 12.5 hours until a battery voltage reached 2.5 V to 2.8 V. Subsequently, the all-solid-state secondary battery was discharged at a constant current of 0.1 C for 12.5 hours until the battery voltage reached 0.3 V.

The discharge capacity in the first cycle was taken as standard capacity. The standard capacity is expressed as specific capacity of Li₂S in Table 1 below.

After the second cycle, the all-solid-state secondary battery was charged and discharged up to 150 cycles under the same conditions as the first cycle. The measurement results are shown in Table 2 below. Initial efficiency is expressed by Equation 1 below. 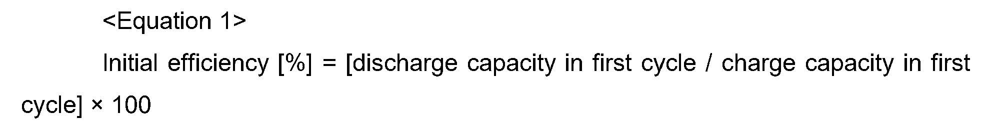 Initial efficiency [%] = [discharge capacity in first cycle / charge capacity in first cycle] × 100

The cycle number refers to the number of cycles required for the discharge capacity to decrease to 80% of the standard capacity after the second cycle. As the cycle number increases, it is considered that the all-solid-state has better lifespan characteristics.

**[Table 2]**

| Class. | Specific capacity [mAh/g] | Electrode density (g/cm₃) | Electrode capacity (mAh/g) | Initial efficiency [%] | Lifespan (SOH80@) |
|---|---|---|---|---|---|
| Example 6 | 1160 | 1.82 | 348 | 90 | 800 |
| 30%Li₂S-20%LiI-(0.75% SUS wire + 6.75 % MoS₂) + 42.5% SE | | | | | |
| Example 7 | 1160 | 1.80 | 348 | 90 | 770 |
| 30%Li₂S-20%LiI-(0.75% Tiwire + 6.75% MoS₂) + 42.5% SE | | | | | |
| Example 8 | 1050 | 2.12 | 315 | 89 | 720 |
| 30%Li₂S-20%LiI-(3.75% SUS wire + 3.75% MoS₂) + 42.5% SE | | | | | |
| Example 9 | 1050 | 2.10 | 315 | 88 | 690 |
| 30%Li₂S-20%LiI-(3.75%Ti wire + 3.75% MoS₂) + 42.5% SE, 2 steps | | | | | |
| Example 10 | 1080 | 1.77 | 324 | 89 | 700 |
| 30%Li₂S-20%LiI-(0.75% SUS wire + 6.75 % VO₂) + 42.5% SE | | | | | |
| Comparative Example 7 | 700 | 1.5 | 210 | 65 | 10 |
| (tatsumisago) 30% Li₂S - 20% Lil - 7.5% CNF + 42.5% SE | | | | | |
| Comparative Example 8 | 1010 | 1.73 | 348 | 88 | 550 |
| 30%Li2S-20%Lil-7.5% MoS₂ + 42.5% SE | | | | | |
| Comparative Example 9 | 950 | 1.7 | 330 | 87 | 630 |
| 30%Li₂S-20%LiI-(0.75% CNF + 6.75 % MoS₂) + 42.5% SE | | | | | |
| Comparative Example 10 | 50 | 1.8 | 30 | - | - |
| 30% Li₂S + 20% Lil + 0.75% SUS wire + 6.75% MoS₂ simple blend, 1 step | | | | | |
| Comparative Example 11 | 300 | 1.8 | 90 | 61 | 20 |
| (Li₂S-MoS2)-(LiI+SUS wire composite) | | | | | |
| Comparative Example 12 | 170 | 1.8 | 51 | - | - |
| 30% Li₂S-20% LiI + (SUS wire 0.75% + 6.75% MoS₂) simple blend, 2 steps | | | | | |

In Table 2, - indicates that the result is poor to the extent that it cannot be measured. As shown in Table 2, the all-solid-state secondary batteries of Examples 6 to 10 employing the composite cathode active materials of Examples 1 to 5 showed improved discharge capacity, initial efficiency, and lifespan characteristics compared to the all-solid-state secondary batteries of Comparative Examples 7 to 12 employing the composite cathode active materials of Comparative Examples 1 to 6.

The all-solid-state secondary battery of Comparative Example 7, employing a Li₂S-LiI-CNF composite cathode active material, also showed a decrease in electrode capacity compared to the case of Example 6, employing the composite cathode active material of Example 1.

The all-solid-state secondary batteries of Comparative Examples 8 to 12, employing the composite cathode active materials of Comparative Examples 2 to 6, showed poor performance in at least one of initial efficiency and lifespan characteristics. Further, the all-solid-state secondary battery of Comparative Example 12A, employing the composite cathode active material of Comparative Example 6A, exhibited discharge capacity, initial capacity, and lifespan characteristics equivalent to those of the all-solid-state secondary battery of Comparative Example 8, thus showing poor performance. Further, the all-solid-state secondary battery of Comparative Example 12B, employing the composite cathode active material of Comparative Example 6B including SiO₂ having no electronic conductivity exhibited very poor initial efficiency and lifespan characteristics, similarly to the all-solid-state secondary battery of Comparative Example 12.

### Evaluation Example 3: Evaluation of high-rate characteristics

The high-rate characteristics of the all-solid-state secondary batteries of Examples 6 to 10 and Comparative Examples 7 to 12, employing the composite cathode active materials prepared in Examples 1 to 5 and Comparative Examples 1 to 6, were evaluated by the following charge-discharge test. A charge-discharge test was performed by putting a solid secondary battery into a constant temperature chamber at 45°C.

Each of the all-solid-state secondary batteries manufactured in Examples 6 to 10 and Comparative Examples 6 to 9 were charged at 45°C with a constant current of 0.1C and a constant voltage of 4.2V until a battery voltage reached 4.2V. Subsequently, the all-solid-state secondary battery was discharged at a constant current of 0.1 C rate until the battery voltage reached 2.5 V.

Subsequently, the all-solid-state secondary battery was charged with a constant current of 0.1C and a constant voltage of 4.2V until the current value reached 0.1C, and then discharged with a constant current of 0.33C until the battery voltage reached 2.5V.

The high-rate characteristics were evaluated according to Equation 3 below after the above charge and discharge and are shown in Table 3 below. 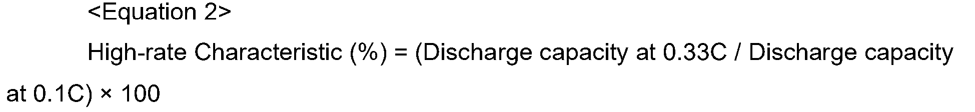 High-rate Characteristic (%) = (Discharge capacity at 0.33C / Discharge capacity at 0.1C) × 100

**[Table 3]**

| Class. | High-rate characteristics (0.33C/0.1C) [%] |
|---|---|
| Example 6 | 97 |
| 30%Li₂S-20%LiI-(0.75% SUS wire + 6.75 % MoS₂) + 42.5% SE | |
| Example 7 | 95 |
| 30%Li₂S-20%LiI-(0.75% Ti wire+ 6.75 % MoS₂) + 42.5% SE | |
| Example 8 | 96 |
| 30%Li₂S-20%LiI-(3.75% SUS wire + 3.75 % MoS₂) + 42.5% SE | |
| Example 9 | 94 |
| 30%Li₂S-20%LiI-(3.75%Ti wire + 3.75 % MoS₂) + 42.5% SE | |
| Example 10 | 95 |
| 30%Li₂S-20%LiI-(0.75% SUS wire + 6.75 % VO₂) + 42.5% SE | |
| Comparative Example 7 (tatsumisago) 30% Li₂S - 20% Lil - 7.5% CNF + 42.5% SE | 89 |
| Comparative Example 8 | 91 |
| 30%Li₂S-20%LiI-7.5% MoS₂ + 42.5% SE | |
| Comparative Example 9 | 90 |
| 30%Li₂S-20%LiI-(0.75% CNF + 6.75 % MoS₂) + 42.5% SE | |
| Comparative Example 10 | 0 |
| 30% Li₂S+20% Lil+0.75% SUS wire+6.75% MoS₂ simple blend | |
| Comparative Example 11 (Li₂S-MoS₂)-(LiI+ SUS wire) composite | 0 |
| Comparative Example 12 | 0 |
| 30% Li₂S-20% LiI + (SUS wire 0.75% + 7.5% MoS₂) simple blend | |

As shown in Table 3, the high-rate characteristics of the all-solid-state secondary batteries of Examples 6 to 10 were improved compared to the all-solid-state secondary batteries of Comparative Examples 7 to 12. As shown in Table 3, the high-rate characteristics of the all-solid-state secondary batteries of Comparative Examples 7 to 12 could not be measured.

### Evaluation Example 4: High-temperature lifespan characteristic test

The charge-discharge characteristics of the all-solid-state secondary batteries manufactured in Example 11 and Comparative Example 13 were evaluated by the following charge-discharge test. A charge-discharge test was performed by putting an all-solid-state secondary battery into a constant temperature chamber at 45°C.

In the first cycle, the all-solid-state secondary battery was charged at a constant current of 0.3 mA/cm² for 12.5 hours until a battery voltage reached 2.5 V to 2.8 V. Subsequently, the all-solid-state secondary battery was discharged at a constant current of 0.3 mA/cm² discharged for 12.5 hours until the battery voltage reached 0.5V.

The discharge capacity of the first cycle was set as standard capacity. After the second cycle, charging and discharging were performed for up to 200 cycles under the same conditions as the first cycle. The measurement results are shown in Table 4 below.

It was considered that the lifespan characteristics were superior as the number of cycles required for the discharge capacity to decrease to 95% of standard capacity after the second cycle increased.

The all-solid-state secondary battery of Comparative Example 11 was unable to measure lifespan characteristics because a short circuit occurred before the first cycle was completed.

**[Table 4]**

| Class. | Number of cycles [times] |
|---|---|
| Example 11 (mono-cell/composite cathode active material/flame-retardant cathode gasket/carbonized cotton sheet/flame-retardant anode gasket) | 172 |
| Comparative Example 13 (mono-cell/ Li2S-C-solid electrolyte composite /-/-/-) | unmeasurable |

As shown in Table 4, the lifespan characteristics of the all-solid-state secondary battery of Example 11 were improved compared to the all-solid-state secondary battery of Comparative Example 13.

It was determined that the all-solid-state secondary battery of Example 11 including a lithium host has improved lifespan characteristics compared to the all-solid-state secondary battery of Comparative Example 13 not including a lithium host, as the growth of lithium dendrites is suppressed, short circuits are suppressed, and volume changes of an anode layer are suppressed.

Although not shown in the drawings, it was confirmed that in the all-solid-state secondary batteries of Examples 7 to 12, a lithium metal layer, which is a second anode active material layer, was formed between the first anode active material layer and the anode current collector after initial charging. This was confirmed through a cross-sectional scanning electron microscope image of the all-solid-state secondary battery.

## Claims

1. An all-solid-state secondary battery comprising: a cathode layer; an anode
layer; and a solid electrolyte layer disposed between the cathode layer and the anode layer,
wherein the cathode layer includes a cathode current collector; and a cathode active material layer disposed on one or both sides of the cathode current collector,
the cathode active material layer includes a composite cathode active material,
the composite cathode active material includes a composite of M₂S, an alkali metal salt, an inorganic electronic conductive structure, and a metal conductive material, where M is an alkali metal, and the alkali metal is Li or Na,
an electronic conductivity of the inorganic electronic conductive structure is 1 x 10⁻³ S/cm or more, and
a ratio of length/diameter of the metal conductive material is 2 or more.

2. The all-solid-state secondary battery of claim 1, wherein the metal
conductive material is SUS, Ti, Ni, Al, Ag, Au, V, Cr, Mn, Fe, Co, Cu, Zn, Nb, Ta, Mo, W, or a combination thereof, and
a length of the metal conductive material is 1 to 50 µm, and a diameter of the metal conductive material is 0.01 to 10 µm.

3. The all-solid-state secondary battery of claim 1, wherein a content of the
metal conductive material is 0.1 to 40 parts by weight based on 100 parts by weight of the composite,
a content of the inorganic electronic conductive structure is 1 to 30 parts by weight based on 100 parts by weight of the composite, and
a mixing weight ratio of the inorganic electronic conductive structure and the metal conductive material is 1:1 to 10:1.

4. The all-solid-state secondary battery of claim 1, wherein a size of M₂S crystallites obtained from an XRD spectrum of the composite is less than 10 nm, and the composite includes a solid solution of M₂S and an alkali metal salt.

5. The all-solid-state secondary battery of claim 1, wherein the inorganic
electronic conductive structure has a zero-dimensional, one-dimensional, or two-dimensional shape, and
the inorganic electronic conductive structure has a length of 1 to 50 µm and a thickness of 0.01 to 10 µm, and the M₂S has a size of 0.1 nm to 10 µm.

6. The all-solid-state secondary battery of claim 1, wherein the inorganic
electronic conductive structure includes a transition metal sulfide, a metal sulfide of at least one of Group 3 to 5 metals, or a combination thereof, the inorganic electronic conductive structure is at least one metal selected from titanium, vanadium, chromium, manganese, iron, cobalt, nickel, copper, zinc, niobium, tantalum, molybdenum, and tungsten, or a combination thereof, and
the inorganic electronic conductive structure is at least one metal oxide selected from VO₂, ReO₂, CrO₂, ReOz, VO₂, SnO₂, TiO₂, ZrO₂, Al₂O₃, TeN, TiN, TiO, TiOx (0.75≤x≤1.45), TiₙO₂ₙ₋₁(4<n<10), ReO₃, CrO₂, and VOz, at least one metal material selected from ZrS₂, FeS, FeS₂, CuS, Cu₂S, CuS₂, Cu₉S₈, Cu₇S₄, CoS, COS₂, Co₃S₄, Co₉S₈, NiS, NiS₂, Ni₉S₈, Ni₃S₂, VS, VS₂, V₂S₃, V₂S₅, VS₄, NbS₂, NbS₃, NbS₄, NbSs, Nb₂S₃, Nb₂S₅, TaS₂, TaS₃, TaS₄, TaS₅, Ta₂S₃, Ta₂S₅, Cr₂S₃, CrS₃, MoS₂, MoS₃, MoS₄, WS₂, WS₃, WS₄, WS₅, MnS, Mn₂S₃, TiS₂, NiNb₃S₆, Cu₂MoS₄, and Cu₄Mo₆S₈, or a combination thereof.

7. The all-solid-state secondary battery of claim 1, wherein a first lattice constant (d1) derived from a seventh peak appearing at a diffraction angle 2θ = 27°±2.0° corresponding to a (111) crystal plane of M₂S in an XRD spectrum of the composite is greater than a second lattice constant (d2) derived from an eighth peak appearing at a diffraction angle 2θ = 27°±2.0° corresponding to the (111) crystal plane of M₂S in the XRD spectrum of M₂S used to prepare the composite, and the first lattice constant (d1) is 5.78 Å or more.

8. The all-solid-state secondary battery of claim 1, wherein a size of the M₂S is equal to or smaller than a size of the alkali metal salt, a size of the inorganic electronic conductive structure is larger than a size of the lithium sulfide or a size of the alkali metal salt, and particle size gradually decreases in the order of the inorganic electronic conductive structure, the alkali metal salt, and the M₂S.

9. The all-solid-state secondary battery of claim 1, wherein the cathode
active material further includes a solid electrolyte,
the solid electrolyte includes a sulfide-based solid electrolyte, an oxide-based solid electrolyte, a polymer solid electrolyte, or a combination thereof, and
a content of the solid electrolyte is 10 to 60 parts by weight based on 100 parts by weight of the cathode active material layer.

10. The all-solid-state secondary battery of claim 1, wherein the alkali metal
salt is a lithium salt or a sodium salt,
the alkali metal salt is a binary compound or a ternary compound,
the binary compound includes Lil, LiBr, LiCl, LiF, LiH, Li₂O, Li₂Se, Li₂Te, Li₃N, Li₃P, Li₃As, Li₃Sb, Li₃Al₂, LiB₃, or a combination thereof, or includes Nal, NaBr, NaCl, NaF, Na₂O, Na₂Se, Na₃N, Na₃P, Na₃As, Na₃Sb, Na₃Al₂, NaB₃, or a combination thereof,
the ternary compound includes Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof, or includes Na₃OCl, NaBF₄, NaPF₆, NaAsF₆, NaClO₄, NaNO₃, NaAlO₂, NaAlCl₄, NaNO₃, Na₂CO₃, NaBH₄, Na₂SO₄, Na₃BO₃, Na₃PO₄, Na₄NCl, Na₅NCl₂, Na₃BN₂, or a combination thereof, and
a molar ratio of the M₂S and the alkali metal salt in the composite is 50:50 to 95:5.

11. The all-solid-state secondary battery of claim 1, wherein the composite of the M₂S, the alkali metal salt, and the inorganic electronic conductive structure has a particle size of 2 µm or less.

12. The all-solid-state secondary battery of claim 1, wherein the composite of the M₂S, the alkali metal salt, and the two-dimensional inorganic electronic conductive structure further includes a carbon-based material.

13. The all-solid-state secondary battery of claim 1, wherein the anode layer includes an anode current collector and a first anode active material disposed on the anode current collector.

14. The all-solid-state secondary battery of claim 13, wherein an anode active
material of the first anode active material layer includes at least one selected from a carbon-based anode active material and a metal-based anode active material,
the carbon-based anode active material includes amorphous carbon, crystalline carbon, porous carbon, or a combination thereof,
the metal-based anode active material includes gold (Au), platinum (Pt), palladium (Pd), silicon (Si), silver (Ag), aluminum (Al), bismuth (Bi), tin (Sn), zinc (Zn), or a combination thereof, and
in claim 1, an anode active material of the first anode active material layer includes a mixture of a metal-based anode active material and a carbon-based material, a metal-based anode active material supported on a carbon-based material, or a combination thereof.

15. The all-solid-state secondary battery of claim 1, wherein the anode layer
includes an anode current collector and a lithium host layer disposed on one side of the anode current collector,
the lithium host layer includes a lithium host structure,
the lithium host structure includes at least one lithium host, and the lithium host includes a carbon-based lithium host, a metal-based lithium host, a polymer-based lithium host, or a combination thereof, and
the all-solid-state secondary battery includes a first inactive member disposed on one side of the anode layer.

16. The all-solid-state secondary battery of claim 1, further comprising: a
second anode active material layer disposed between the anode current collector and the first anode active material layer, wherein the second anode active material layer is a metal layer containing lithium or a lithium alloy,
the second anode active material layer is a plated layer, and a thickness of the first anode active material layer is greater than a thickness of the second anode active material layer.

17. The all-solid-state secondary battery of claim 1, further comprising: an inactive elastic member disposed on one side of the cathode layer or the anode layer.

18. The all-solid-state secondary battery of claim 1, wherein the electrolyte
layer includes a solid electrolyte, a gel electrolyte, or a combination thereof, the solid electrolyte includes a sulfide-based solid electrolyte, an oxide-based solid electrolyte, a polymer solid electrolyte, or a combination thereof,
the gel electrolyte includes a polymer gel electrolyte,
the sulfide-based solid electrolyte is at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number, and Z is one of Ge, Zn, and Ga), Li₂S-GeS₂, Li₂S-SiS₂-Li₃PO₄,
Li₂S-SiS₂-LiₚMO_{q} (p and q are each a positive number, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and
Li₇₋ₓPS₆₋ₓIₓ (0≤x≤2),
the sulfide-based solid electrolyte includes an argyrodite-type solid electrolyte,
the argyrodite-type solid electrolyte includes at least one selected from Li₆PS₅Cl, Li₆PS₅Br, and Li₆PS₅I, and
the argyrodite-type solid electrolyte has a density of 1.5 to 2.0 g/cc.

19. The all-solid-state secondary battery of claim 1, wherein the anode layer
includes an anode current collector,
at least one of the cathode current collector and the anode current collector includes a base film and a metal layer disposed on one side or both sides of the base film,
the base film includes a polymer, the polymer includes polyethylene terephthalate (PET), polyethylene (PE), polypropylene (PP), polybutylene terephthalate (PBT), polyimide (PI), or a combination thereof, and
the metal layer includes indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

20. A method of manufacturing the all-solid-state secondary battery of claim 1, the method comprising: first milling M₂S and an alkali metal salt; adding an inorganic electronic conductive structure and a metal conductive material to a product of the first milling, and second milling the same to obtain a composite;
preparing a cathode by using a composition in which a binder is added to or mixed with the composite;
preparing an anode; and
placing an electrolyte between the cathode and the anode.
